# EUROPÄISCHE PATENTSCHRIFT

(11) **EP 2 202 260 B1**
(45) Veröffentlichungstag und Bekanntmachung des Hinweises auf die Patenterteilung: **12.12.2012**
(21) Anmeldenummer: 08022424.9
(22) Anmeldetag: 23.12.2008
(51) Int. Cl.: C08G 69/34, C08G 69/36, C08L 77/06, C08G 81/02, C08G 69/40, C08G 69/04, C08G 69/16, C08G 69/28, C08G 69/44, C08G 69/48, C08K 5/3435, C08K 5/00

(54) **Inhärent stabilisiertes Polyamid-Elastomer sowie Verfahren zu dessen Herstellung**
Inherently stable polyamide elastomer and method for production of same
Elastomère polyamide stabilisé inhérent et son procédé de fabrication

(43) Veröffentlichungstag der Anmeldung: 30.06.2010
(73) Patentinhaber: EMS-PATENT AG, 7013 Domat/Ems (CH)
(72) Erfinder: Hoffmann, Botho, Dr., 7013 Domat/Ems (CH); Bayer, Andreas, Dr., 7013 Domat/Ems (CH); Liedloff, Hanns-Jörg, Dr., 7013 Domat/Ems (CH); Pfleghar, Mark, Dipl.-Ing., 7013 Domat/Ems (CH)
(74) Vertreter: Pfenning, Meinig & Partner GbR

(56) Entgegenhaltungen:
- DE-A1- 4 413 177
- DE-A1- 19 812 135
- US-A1- 2007 066 725

## Beschreibung

Die vorliegende Erfindung betrifft ein inhärent stabilisiertes Polyamid-Elastomer, das mindestens ein bifunktionelles Polyamidsegment sowie mindestens ein bifunktionelles Weichsegment aufweist. Dabei bildet das Polyamid im wesentlichen die Hartphase, das Weichsegment im wesentlichen die Weichphase eines thermoplastischen Elastomers. Es handelt sich somit in der Regel um segmentierte Blockcopolymere, die Eigenschaften von Elastomeren und Thermoplasten miteinander vereinen, d.h. sie weisen in einem breiten Temperaturbereich elastische Eigenschaften auf und sind thermoplastisch zu verarbeiten. Die erfindungsgemäßen Polyamid-Elastomere zeichnen sich dadurch aus, dass sie mindestens einen chemisch gebundenen Stabilisator enthalten, der die Hitzebeständigkeit und/oder die Lichtstabilität des erfindungsgemäßen Polyamid-Elastomers deutlich erhöht.

Aus dem Stand der Technik ist seit langem die Stabilisierung von Polyetherblockamiden durch Zucompoundieren nicht reaktiver Stabilisatoren, wie beispielsweise UV-Absorber bzw. Oxidationsinhibitoren, bekannt, um den Polyetherblockamiden auch bei erhöhten Temperaturen Wärme- und Licht-stabilisierte Eigenschaften zu verleihen. Tatsächlich ist eine Stabilisierung bei Polyetherblockamiden unerlässlich, so sind beispielsweise PEBA-Formmassen (PEBA=Polyether- blockamide) ohne Antioxidantien nicht bekannt (Technische Thermoplaste-Polyamide, Kunststoffhandbuch, Hrsg. von Ludwig Bottenbruch, S. 865). Eine vorteilhafte Ausführung der Stabilisierung von Polyamid-Elastomeren beschreibt auch US 2007/0066725 A1.

Weiterhin ist in der Literatur neben der Verwendung von nicht reaktiven Stabilisatoren für den Fall von Homopolyamiden auch die Reaktivstabilisierung bekannt, wobei zumeist sterisch gehinderte Phenole oder aromatische Amine eingesetzt werden, die gegenüber den funktionellen Gruppen der Polyamid-bildenden Monomere, also Amino- bzw. Säurefunktionalitäten, Reaktivität aufweisen und sich somit chemisch an die Polyamidketten binden. Beispielsweise beschäftigen sich hierbei die Anmeldungen EP 0 759 953, EP 1 099 727, EP 1 376 156, DE 195 37 614, DE 26 42 461, EP 0 822 275, EP 1 053 272, EP 1 070 093, WO 95/28443 EP 0 818 491, DE 198 12 135 oder DE 44 13 177 mit diesem Prinzip der Reaktivstabilisierung von Homopolyamiden.

Nachteilig bei den oben genannten stabilisierten Polyamid-Elastomeren, die lediglich eine Zucompoundierung des jeweiligen Stabilisators aufweisen, ist, dass bei derartigen inerten und nur physikalisch eingebundenen Stabilisatoren mit Alterung des Polyamid-Elastomers beispielsweise durch permanente äußere Einflüsse, wie Einwirkung von Lösungsmitteln oder Witterungseinflüssen, es zu einem Auswaschen des zucompoundierten Stabilisators kommen kann. Mit zunehmendem Alter des Polyamid-Elastomers findet somit ein immer schneller verlaufender Abbau statt.

Weiterhin ist bei transparenten Polyamid-Elastomeren nachteilig, dass durch Zucompoundierung von Stabilisatoren der Haze der Polyamid-Elastomere verschlechtert wird, d.h. eine Trübung eintritt. Dies kann einerseits durch nukleierende Effekte oder Verunreinigungen oder schlecht dispergierte Additive erklärt werden.

Es ist daher Aufgabe der vorliegenden Erfindung, ein inhärent stabilisiertes Polyamid-Elastomer anzugeben, das eine größere Stabilität und somit längere Lebensdauer aufweist und bei dem gleichzeitig die den Polyamid-Elastomeren eigenen vorteilhaften Eigenschaften zu tragen kommen. Ebenso ist es Aufgabe der vorliegenden Erfindung, ein entsprechendes Verfahren zur Herstellung eines derartigen inhärent stabilisierten Polyamid-Elastomers sowie Verwendungszwecke anzugeben.

Diese Aufgabe wird bezüglich des inhärent stabilisierten Polyamid-Elastomers mit den Merkmalen des Patentanspruchs 1 und bezüglich des Verfahrens zu seiner Herstellung mit den Merkmalen des Patentanspruchs 10 gelöst. Patentanspruch 14 gibt die Verwendung einer Formmasse enthaltend ein erfindungsgemäßes Polyamid-Elastomer an, Patentanspruch 16 betrifft Formteile. Die jeweiligen abhängigen Ansprüche stellen dabei vorteilhafte Weiterbildungen dar.

Erfindungsgemäß wird somit ein inhärent stabilisiertes Polyamid-Elastomer gemäß folgender Formel I bereitgestellt:

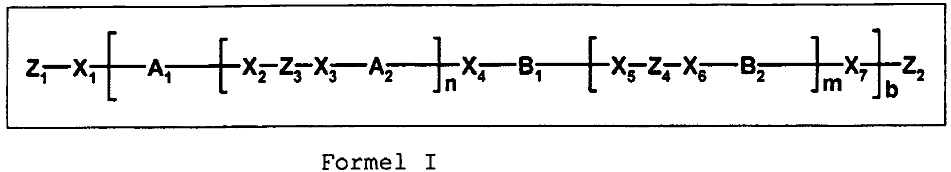

Dabei bedeuten
A₁ und A₂ = bifunktionelle Polyamid- und/oder Copolyamidsegmente,
B₁ und B₂ = bifunktionelle Weichsegmente,
X₁ bis X₇ = unabhängig voneinander eine Amid-(-CON(H)-) oder Esterbindung (-COO-),
b = 1 bis 100'000, bevorzugt 1 bis 10'000, besonders bevorzugt 1 bis 1000, ganz besonders bevorzugt 1 bis 100,
n und m = unabhängig voneinander 0 oder 1,
Z₁ und Z₂ unabhängig voneinander Wasserstoff, ein monofunktioneller Regler und/oder ein chemisch gebundener Reaktivstabilisator ausgewählt aus der Gruppe bestehend aus sterisch gehinderten Aminen und/oder sterisch gehinderten Phenolen sind,
und wobei Z₃ und Z₄ unabhängig voneinander ein bifunktioneller Regler mit chemisch gebundenem Reaktivstabilisator ausgewählt aus der Gruppe bestehend aus sterisch gehinderten Aminen, sterisch gehinderten Phenolen sind, mit der Maßgabe, dass für den Fall, dass m=n=0 zumindest ein Z₁ oder Z₂ ein chemisch gebundener Reaktivstabilisator ist, der chemisch an die Polymerkette gebunden ist, und der Gewichtsanteil des bifunktionellen Polyamid- und/oder Copolyamidsegments relativ zum bifunktionellen Weichsegment zwischen 0,05:1 und 20:1 beträgt.

Die Reste bzw. Gruppen A₁, A₂ sowie B₁, B₂ und X₁-X₇ sowie Z₁ und Z₂ sowie Z₃ und Z₄ können dabei jeweils gleich oder verschieden sein.

Erfindungswesentlich ist somit, dass im Polyamid-Elastomer zumindest ein stabilisierender Rest chemisch gebunden ist und ein spezielles Gewichtsverhältnis zwischen den bifunktionellen Polyamidsegmenten (A) und den bifunktionellen Weichsegmenten (B) eingehalten wird. Pro Molekül des Polyamid-Elastomers gemäß der Formel I ist somit mindestens ein Reaktivstabilisator (Z₁ oder Z₂) chemisch über eine Ester - oder Amidbindung an dessen Terminus oder innerhalb des Moleküls gebunden. Erfindungsgemäß ist jedoch ebenso möglich, dass beide Termini des Polyamid-Elastomers mit einem chemisch gebundenen Stabilisatorrest versehen sind.

Die erfindungsgemäßen Polyamid-Elastomere enthalten Polyamid- (= Hartsegmente) sowie Weichsegment-Einheiten, z.B. Polyether- und/oder Polyester-Einheiten, und werden z.B. durch Polykondensation der jeweils mit reaktiven Endgruppen versehenen Einheiten gebildet. Dabei können die Polyamid-Einheiten (Polyamid-segment A) carboxyl- und/oder aminterminiert sein, sei es lediglich an einem Terminus des Segmentes A oder an beiden Termini. Die Weichsegmente B sind beispielsweise je nach Struktur amin-, carboxyl- oder hydroxylterminiert. Erfindungsgemäß ist das Weichsegment B₁ und/oder B₂ aus der Gruppe bestehend aus Polyethern, Polyestern, Poly-olefinen, Polysiloxanen, Polycarbonaten, Polycar-bamaten und/oder Polycaprolactonen ausgewählt. Die bevorzugten Weichsegment-Einheiten sind Ester- bzw. Polyester- und Polyether-Einheiten. Die Ester- oder Polyester-Einheiten sind bevorzugt carboxyl- oder hydroxylterminiert, während die Polyether-Einheiten vorzugsweise Hydroxyl-, Car-boxyl- oder Aminoendgruppen tragen. Damit ergeben sich bevorzugt folgende Kombinationsmöglichkeiten für die Verknüpfung des Hartsegmentes A und dem Weichsegment B.
(1) Die Polyamid-Einheit ist carboxyl- und die Ester- oder Polyester-Einheit ist hydroxylterminiert. Das gebildete Copolymer ist dann ein Polyesteramid.
(2) Die Polyamid-Einheit ist carboxyl- und das Weichsegment ist aminterminiert. Das gebildete Copolymer ist dann ein Polyetheramid, für den beispielhaften Fall, dass das Weichsegment ein Polyether ist.
(3) Die Polyamid-Einheit ist carboxyl- und das Weichsegment ist hydroxylterminiert. Das gebildete Copolymer ist dann ein Polyetheresteramid, für den beispielhaften Fall, dass das Weichsegment ein Polyether ist.
(4) Die Polyamid-Einheit ist carboxyl- und das Weichsegment amino- und ein weiteres vorhandenes Weichsegment ist hydroxylterminiert. Das gebildete Copolymer ist ein Blockcopolyetheresteretheramid, für den beispielhaften Fall, dass das Weichsegment ein Polyether ist.
(5) Die Polyamid-Einheit ist amin- und das Weichsegment ist carboxylterminiert. Das gebildete Copolymer ist dann ein Polyetheramid, für den beispielhaften Fall, dass das Weichsegment ein Polyether ist.
(6) Die Polyamid-Einheit ist amin- und das Weichsegment und eine weitere Polyester-Einheit sind carboxylterminiert. Das gebildete Copolymer ist ein Polyetheresteresteramid, für den beispielhaften Fall, dass das Weichsegment ein Polyether ist.
(7) Die Polyamid-Einheit ist amin- und das Weichsegment ist carboxylterminiert. Das gebildete Copolymer ist ein Polyetheramid, für den beispielhaften Fall, dass das Weichsegment ein Polyether ist.

Die zuvor genannten Möglichkeiten sind jedoch lediglich beispielhaft und nicht abschließend oder limitierend auf vorliegende Erfindung zu verstehen.

Bevorzugt ist dabei, dass, wenn die Reste X₁ bis X₇ Esterbindungen (-COO-) sind, die Reste B₁ und B₂ Oligomere oder Polymer auf Basis von linearen oder verzweigten, substituierten oder unsubstituierten C₂-C₃₆-Alkylenen, Oligomeren oder Polymeren auf Basis von C₆-C₃₆-Cycloalkylenen, C₆-C₂₀-Arylen, Polycaprolactonen, Polyestern auf Basis aliphatischer oder cycloaliphatischer Dicarbonsäuren und Diolen, aliphatische Polycarbonate, C₂-C₄-Polyoxyalkylenen sowie Copolymere und Mischungen dieser Elemente sind. In einer besonderen Ausführungsform werden die Oligomere oder Polymere in-situ während der Polymerisation des Polyamidelastomeren hergestellt aus den oben genannten Monomeren.

Ebenfalls bevorzugt ist dabei, dass, wenn die Reste X₁ bis X₇ Amidbindungen (-CON(H)-) sind, die Reste B₁ und B₂ gegeben sind als Oligomer oder Polymer auf Basis von C₂-C₄-Polyoxyalkylenen, Polyolefinen, Polysiloxanen mit zahlenmittlerer Molmasse im Bereich von 200 bis 3000 g/mol (bevorzugt 300 bis 2500 g/mol) sowie Copolymere und Mischungen dieser Elemente.

In einer bevorzugten Ausführungsform sind die Reste Z₁ und/oder Z₂, d.h. der an das Molekül gebundene Stabilisator der oben angegebenen Formel I dabei unabhängig voneinander ausgewählt aus der Gruppe bestehend aus Wasserstoff oder den Resten der folgenden Formeln II bis IV

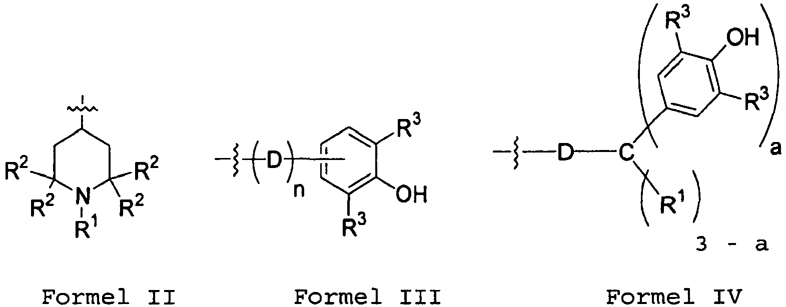

Dabei bedeuten:
R¹ = H oder ein linearer oder verzweigter C₁-C₂₀ Alkylrest,
R² = unabhängig voneinander H oder ein linearer oder verzweigter C₁-C₂₀ Alkylrest,
R³ = H oder ein linearer oder verzweigter C₁-C₂₀-Alkylrest,
D = eine lineare oder verzweigte C₁-C₂₀-Alkylenkette, die auch von den Heterogruppierungen -NR¹-, -O - und/oder -S- unterbrochen sein kann, wobei R¹ die oben angegebene Bedeutung hat,
n = 0 oder 1, sowie
a = 1, 2 oder 3.

Bevorzugte Reste Z₃ und/oder Z₄ sind dabei ausgewählt aus den Resten gemäß der allgemeinen Formeln V und VI:

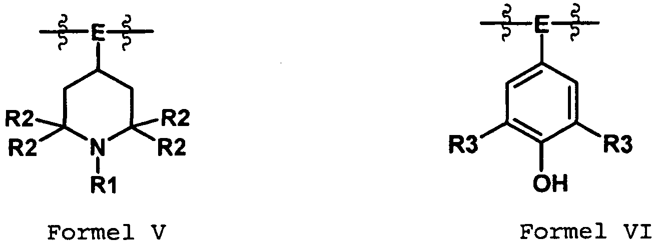

Dabei bedeuten:
R¹ bis R³ wie oben angegeben und
E = eine linearer oder verzweigter C₁-C₂₀-Alkylen - oder Arylen-Rest, der auch von den Heterogruppierungen -NR¹-, -O- und/oder -S- unterbrochen sein kann.

In einer bevorzugten Ausführungsform wird für Z₁ und/oder Z₂ ein Rest der allgemeinen Formel II mit R¹ = H verwendet, in diesem Fall kann zumindest auch ein Teil der Reste durch Z₃ und/oder Z₄ ersetzt sein.

Die bevorzugten Reaktivstabilisatoren, die erfindungsgemäß am Polyamid-Elastomer gebunden sind, sind somit sterisch gehinderte Amine (z.B. Piperidin-Derivate) oder sterisch gehinderte Phenole. Die speziellen Reaktivstabilisatoren, die bei der Synthese der erfindungsgemäßen Polyamid-Elastomere verwendet werden, sind weiter unten stehend angeführt. Die oben genannten Reste der Formeln II bis VI leiten sich somit von diesen Verbindungen ab. Die erfindungsgemäße Anbindung bzw. Einbindung der Reaktivstabilisatoren erfolgt gemäß der Formel I entweder über eine Amid - oder eine Esterbindung.

In einer vorteilhaften Ausführungsform beträgt der Gewichtsanteil der Summe der bifunktionellen Polyamidsegmente A₁ und A₂ relativ zur Summe der bifunktionellen Weichsegmente B₁ und B₂ zwischen 5:95 und 95:5, bevorzugt 40:60 und 90:10, weiter bevorzugt zwischen 50:50 und 90:10, und insbesondere bevorzugt zwischen 50:50 und 85:15.

In einer weiteren vorteilhaften Ausführungsform beträgt das zahlenmittlere Molekulargewicht Mₙ der bifunktionellen Polyamidsegmente A₁ und A₂ unabhängig voneinander (für b > 1) zwischen 200 und 5000 g/mol, bevorzugt zwischen 700 und 4000 g/mol, besonders bevorzugt zwischen 750 und 3000 g/mol, und/oder das zahlenmittlere Molekulargewicht Mₙ der bifunktionellen Weichsegmente B₁ und B₂ unabhängig voneinander (für b > 1) zwischen 200 und 5000 g/mol, bevorzugt zwischen 200 und3000 g/mol, besonders bevorzugt zwischen 300 und 2500 g/mol.

Ebenso ist es bevorzugt, wenn die Polyamidsegmente A₁ und A₂ unabhängig voneinander ein Polykondensat aus
a) mindestens einem Diamin, insbesondere einem aliphatischen und/oder cycloaliphatischen Diamin mit 2 bis 26 Kohlenstoffatomen und/oder einem arylaliphatischen Diamin mit 6 bis 36 Kohlenstoffatomen, sowie
b) mindestens einer aliphatischen und/oder cycloaliphatischen Dicarbonsäure mit 2 bis 36 Kohlenstoffatomen und/oder einer aromatischen Dicarbonsäure mit 6 bis 36 Kohlenstoffatomen, und/oder
c) mindestens einem Lactam und/oder mindestens einer Aminocarbonsäure, jeweils mit 2 bis 36 Kohlenstoffatomen
sind. Die Erfindung eignet sich daher prinzipiell für die Stabilisierung eines jeden bekannten Polyamid-Elastomers.

Unter die bevorzugten Ausführungsformen der Polyamidsegmente A₁ und A₂ fallen mehrere Möglichkeiten, die im Folgenden im speziellen ausgeführt werden und alle zur Erfindung zu zählen sind.

In Bezug auf das Polyamid-Elastomer werden folgende strukturelle Ausgangsmaterialien bevorzugt: transparentes Polyesteramid, Polyamid-Elastomer auf Basis nachwachsender Rohstoffe, Polyetheramid oder Polyetheresteramid auf Basis von wenigstens einem Polyamidsegment A und auf Basis von wenigstens einem Weichsegment B (z.B. Polyester- und/oder Ester - und/oder Polyetheranteil), wobei das Polyamid A auf Basis von Dicarbonsäuren und alkylsubsituiertem Bis(aminocyclohexyl)methan und gegebenenfalls weiteren Diaminen, und/oder Lactamen und/oder Aminocarbonsäuren ausgebildet sein kann und das Weichsegment B (z.B. der Polyester- und/oder Esteranteil) auf Basis eines Diols und einer Dicarbonsäure und/oder einer Hydroxycarbonsäure sowie der Polyetheranteil auf Basis eines Polyetherdiamins. Maßgeblich ist dabei stets die erfindungsgemäße inhärente Stabilisierung durch chemisches Anbinden eines Reaktivstabilisators. Bevorzugte Ausgangsstoffe sind im Folgenden aufgelistet:
Diamin (für Polyamid-Anteile A₁ und A₂) (Bestandteil (a)) :
   Diamin ausgewählt aus der Gruppe der verzweigten oder unverzweigten aliphatischen C₄-C₁₈-Diamine, cycloaliphatischen C₈-C₂₀-Diamine, Diamine mit aromatischem Kern sowie Mischungen und Kombinationen davon. Beispiele für lineare oder verzweigte, aliphatische Diamine sind 1,4-Butandiamin, 1,5-Pentandiamin, 2-Methyl-1,5-pentandiamin (MPMD), 1,6-Hexandiamin, 1,7-Heptandiamin, 1,8-Octandiamin (OMDA), 1,9-Nonandiamin (NMDA), 1,10-Decandiamin, 2-Methyl-1,8-octandiamin (MODA), 2,2,4-Trimethylhexamethylendiamin (TMHMD), 2,4,4-Trimethylhexamethylendiamin (TMHMD), 5-Methyl-1,9-nonandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, und 1,18-Octadecandiamin. Als cycloaliphatische Diamine können beispielsweise Cyclohexandiamin, 1,3-Bis-(aminomethyl)-cyclohexan (BAC), Isophorondiamin, Norbonandiamin, Norbonandimethylamin, Bis(aminomethyl)-norbonan, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden. Als arylaliphatisches Diamin sei m-Xylylendiamin (MXDA) und p-Xylylendiamin (PXDA) erwähnt.
   Dicarbonsäure (sowohl für die Polyamidsegmente A₁ und A₂ (Bestandteil (b)) als auch für die Weichsegmente B₁ und B₂, d.h. z.B. Polyester-Anteil):
   Die wenigstens eine Dicarbonsäure kann ausgewählt sein aus der folgenden Gruppe: aliphatische C₄-C₄₄-Disäure, cycloaliphatische C₈-C₃₆-Disäure, aromatische Disäure (bevorzugt TPS, IPS, NDS), sowie Mischungen und Kombinationen davon. Bevorzugt ist die wenigstens eine Dicarbonsäure ausgewählt aus der Gruppe Adipinsäure, Sebazinsäure, Dodecandisäure, Terephthalsäure, Isophthalsäure, Cyclohexandicarbonsäure und Mischungen davon, besonders bevorzugt Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, insbesondere cis - und/oder trans-Cyclohexan-1,4-dicarbonsäure und/oder cis- und/oder trans-Cyclohexan-1,3-dicarbonsäure (CHDA), Dimerfettsäure mit 36 oder 44 C-Atomen, Isophthalsäure, Terephthalsäure, Naphthalindicarbonsäure.
Lactam resp. Aminocarbonsäure (für Polyamid-Anteile A₁ und A₂) (Bestandteil (c)) :
   Das Lactam respektive die Aminocarbonsäure ist bevorzugt ausgewählt aus der Gruppe Caprolactam, Laurinlactam, Aminocapronsäure, Aminolaurinsäure, Aminoundecansäure.
   Besonders bevorzugte Lactame sind Lactame bzw. α,ω-Aminosäuren mit 4, 6, 7, 8, 11 oder 12 C-Atomen. Dies sind die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.
   Bevorzugte Weichsegmente B₁ und B₂ sowie diesem Segment zugrunde liegende Ausgangsmaterialien sind im Folgenden dargestellt:
Diole (Bereitstellung der Weichsegmente B₁ und B₂):
   Diol ausgewählt aus der Gruppe der aliphatischen C₂-C₃₆-Diole, cycloaliphatischen C₆-C₃₆-Diole, C₈-C₃₆-Diole mit aromatischem Kern, ethergruppenhaltigen Diole, Polycaprolacton-Diole oder Kombinationen davon. Bevorzugt ist das Diol ausgewählt aus der Gruppe Ethandiol, Propandiol, Butandiol, Pentandiol, Hexandiol, Neopentylglykol, Cyclohexandimethanol, C₃₆-Dimerfettdiol, Polyoxyalkylendiole (lineare oder verzweigte C₂-C₅-Alkylene) (insbesondere mit einer zahlenmittleren Molmasse im Bereich von 200 bis 2000 g/mol), Polycaprolacton-Diol mit einer zahlenmittleren Molmasse im Bereich von 500 bis 3000 g/mol, besonders bevorzugt 750 bis 2000 g/mol, sowie Kombinationen davon.
Polyether-Segment (amino- oder hydroxy- oder carboxylterminiert, Bereitstellung von B₁ und B₂):
   Die Reste B₁ und/oder B₂ nach der allgemeinen Formel I leiten sich bevorzugt von den Edukten der nachfolgenden Verbindungen ab. Die entsprechenden Funktionalitäten (Amino-, Hydroxy- und Carbonsäurefunktionalität) gehen in den entsprechenden Amid- oder Esterbindungen X₄ bis X₇ auf.
   Polyoxyethylendiamin, Polyoxyethylendicarbonsäure, Polyoxypropylendiamin, Polyoxypropylendicarbonsäure, Polyoxytetramethylendiamin, Polyoxytetramethylendicarbonsäure mit einer zahlenmittleren Molmasse im Bereich von 200 bis 3000 g/mol, deren Copolymere oder Mischungen sowie Copolymere mit den oben aufgeführten Diolen. Insbesondere miteingeschlossen sind Polyetherderivate der Form A-X-Y-Z-B, wobei A, B unabhängig voneinander Amin oder Alkohol-Rest oder Carbonsäure, X,Y,Z unabhängig voneinander mono-, oligo - oder polymere Einheiten aus Oxyethylen, Oxypropylen oder Oxytetramethylen darstellen.
   Solche Polyethersegmente werden beispielsweise von der Firma Huntsman unter der Bezeichnung Elastamine vertrieben.
Transparente Polyamid-Elastomere:
   In einer bevorzugten Ausführungsform ist das erfindungsgemäße Polyamid-Elastomer transparent. Der Begriff transparentes Polyamid-Elastomer, respektive transparente Formmasse, wie er in diesem Dokument verwendet wird, soll Polyamid-Elastomere oder daraus gebildete Formmassen bezeichnen, deren Lichttransmission wenigstens 70 % beträgt, wenn das Polyamid-Elastomer oder die Formmasse (in reiner Form, d.h. ohne die oben angegebenen weiteren Bestandteile der erfindungsgemäßen Formmasse) in Form eines dünnen Plättchens von 2 mm Dicke vorliegt. Die Messung der Lichttransmission wird dabei mit einem Haze Gard Plus Gerät der Firma BYK-Gardner an Platten der Dimension 2 x 60 x 60 mm gemäss ASTM D 1003 durchgeführt. Die Platten werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt.

Bevorzugt verfügen das Polyamid-Elastomer und/oder die Formmasse also über eine Transmission von wenigstens 70 %, bevorzugt von wenigstens 80 %, besonders bevorzugt von größer als 85 %.

Überraschend wurde dabei festgestellt, dass derartige transparente Polyamid-Elastomere durch Compoundierung an Transparenz verlieren. Dem Stand der Technik ist dieser Nachteil der konventionellen Stabilisierung durch Eincompoundierung von Stabilisatoren nicht zu entnehmen. Auch die zitierten Vorveröffentlichungen zur Reaktivstabilisierung von Homopolyamiden helfen dem Fachmann nicht, da für kristalline Polyamide derartige Nachteile durch Compoundierung nicht beobachtet wurden. Die erfindungsgemässe Verwendung von Reaktivstabilisatoren stellt also dem Fachmann eine Lehre zur Verfügung, besonders transparente Polyamid-Elastomere zu erhalten.

Für optisch weniger hochwertige Bauteile oder für Bauteile, bei welchen nur das Reflexionsverhalten relevant ist (beispielsweise Dekorationsartikel), ist auch eine niedrigere Transparenz und sogar eine leichte Trübung tolerierbar.

Weiterhin ist es bevorzugt, wenn das Polyamid-Elastomer und/oder die Formmasse einen Haze (Trübung) von höchstens 20 %, bevorzugt höchstens 15 %, besonders bevorzugt höchstens 10 % aufweisen (ASTM 1003, Schichtdicke: 2 mm).

Das transparente Polyamid-Elastomer ist bevorzugt ein Polyesteramid oder ein Polyetheresteramid auf Basis eines Polyester- und/oder Esteranteils mit einem Polyester aus einem C₃₆-Diol und einer oder mehrerer Dicarbonsäuren ausgewählt aus der Gruppe Adipinsäure, Sebazinsäure, Dodecandisäure, C₃₆-Dimerfettsäure, Isophthalsäure und Terephthalsäure, oder ein Polyetheramid. Transparente Polyetheresteramide können dabei auch mit einem OH-terminierten Polyether hergestellt werden.

Insbesondere bevorzugt sind Polyamid-Elastomere, die amorphe oder mikrokristalline Polyamid-Hartsegmente A₁ und A₂ enthalten. Die amorphen oder mikrokristallinen Polyamid-Hartsegmente A₁ und A₂ der erfindungsgemäßen Polyesteramide, Polyetheramide oder Polyetheresteramide besitzen eine zahlenmittlere Molmasse im Bereich von 200 bis 5000 g/mol, bevorzugt im Bereich von 700 bis 4000 g/mol und ganz besonders bevorzugt im Bereich von 750 bis 3000 g/mol.

Wenn ein mikrokristallines Polyamid-Hartsegment, respektive Copolyamid-Hartsegment, enthalten ist, so ist es bevorzugt, dass dieses mikrokristalline Polyamid-Hartsegment und/oder Copolyamid-Hartsegment eine Schmelzenthalpie im Bereich von 4-40 J/g, insbesondere im Bereich von 4 bis 25 J/g aufweist (gemessen mit Differential Scanning Calorimetry, DSC). Bevorzugtermassen handelt es sich bei mikrokristallinen Polyamid-/Copolyamid-Hartsegment-Zusammensetzungen um Polyamid-Systeme, welche, in hochmolekularer Form und ohne weitere Bestandteile verarbeitet, transparente Formteile ergeben. D.h. die Dimension der Kristallite ist unterhalb der Wellenlänge des sichtbaren Lichtes. Bevorzugt verfügt das mikrokristalline Polyamid-Hartsegment über eine Schmelztemperatur von wenigstens 120 °C, bevorzugt von wenigstens 135 °C und insbesondere von wenigstens 150 °C.

Das vorzugsweise mikrokristalline Polyamid und/oder Copolyamid-Hartsegment basiert auf alkyl-substituiertem Bis(aminocyclohexyl)methan oder Bis(aminocyclohexyl)propan sowie gegebenenfalls anderen cycloaliphatischen Diaminen (z.B. PACM, IPD, BAC) und/oder aliphatischen C₄-C₁₈-Diaminen und/oder Diaminen mit aromatischem Kern (z.B. MXDA oder PXDA).

Bevorzugt wird dabei, dass dieses auf Basis von MACM und aliphatischen Dicarbonsäuren mit 10 bis 36 Kohlenstoffatomen aufgebaut ist, wobei es sich beim anderen cycloaliphatischen Diamin bevorzugt um PACM und/oder IPD (Isophorondiamin) mit oder ohne zusätzliche Substituenten, und besonders bevorzugt um ein Copolyamid des Typs MACM/PACM jeweils mit aliphatischen Dicarbonsäuren mit 10 bis 36 Kohlenstoffatomen, wie z.B. MACM12/PACM12, handelt. Dabei beträgt die PACM-Konzentration vorzugsweise mehr als 40 mol-%, besonders bevorzugt mehr als 55 mol-%.

Ebenso ist es bevorzugt, wenn das Polyamidsegment A zu wenigstens 20 mol-%, bevorzugt zumindest 30 mol-%, insbesondere bevorzugt zumindest 40 mol-% und besonders bevorzugt zur Gänze auf alkylsubstituiertem Bis(aminocyclohexyl)methan beruht. Vorzugsweise handelt es sich beim alkylsubstituierten Bis(aminocyclohexyl)methan um Bis-(4-amino-3-methyl-cyclohexyl)-methan (MACM). Bevorzugte Molmassen eines derartigen Polyamidsegments A (zahlengemittelt) liegen dabei im Bereich von 500 bis 5.000 g/mol, bevorzugt im Bereich von 700 bis 4.000 g/mol und besonders bevorzugt im Bereich von 750 bis 3.000 g/mol.

Generell steht MACM für die ISO-Bezeichnung Bis-(4-amino-3-methyl-cyclohexyl)-methan, welches unter dem-Handelsnamen 3,3'-Dimethyl-4-4'-diaminodicyclohexylmethan als Laromin C260-Typ (CAS Nr. 6864-37-5) kommerziell erhältlich ist. Die Ziffer nach dem Begriff MACM steht jeweils für eine aliphatische lineare Dicarbonsäure (C₁₂ z.B. DDS, Dodecandisäure), mit welcher das Diamin MACM polymerisiert ist.

PACM steht für die ISO-Bezeichnung Bis-(4-aminocyclohexyl)-methan, welches unter dem Handelsnamen 4,4'-Diaminodicyclohexylmethan als Dicykan-Typ (CAS Nr. 1761-71-3) kommerziell erhältlich ist.

Alternativ oder zusätzlich kann es sich, wie bereits erläutert, beim Polyamid-Hartsegment um ein amorphes Polyamid und/oder Copolyamid handeln, dann vorzugsweise mit einer Schmelzenthalpie von weniger als 4 J/g (gemessen mit Differential Scanning Calorimetry, DSC).

Gemäß einer bevorzugten Ausführungsform verfügt das amorphe Polyamid-Hartsegment A über eine Glasübergangstemperatur oberhalb von wenigstens 50 °C, bevorzugt von mehr als 80 °C und besonders bevorzugt von mehr als 100 °C.

Bei Verwendung kurzkettiger Segmente, insbesondere nach Konditionierung und insbesondere bei mikrokristallinen Phasen, kann dabei das Segment jedoch durchaus einen Tg unter 50°C aufweisen.

Bevorzugt sind Polyamid-Elastomere, bei denen das Polyamidsegment A auf Basis von Bis-(4-amino-3-methylcyclohexyl)-methan (MACM) und Isophthalsäure und/oder Terephthalsäure und/oder einer aliphatischen C₄-C₃₆-, bevorzugt einer C₁₂-Dicarbonsäure und/oder cycloaliphatischen C₈-C₃₆-Dicarbonsäure ist.

Das transparente Polyamid-Elastomer ist, wie bereits erwähnt, bevorzugt ein Polyetheramid oder Polyetheresteramid oder Polyesteramid, bevorzugt auf Basis eines Polyamid-Systems ausgewählt aus der Gruppe MACM12, MACM14, MACM18, MACM12/PACM12, MACM14/PACM14, MACM18/PACM18, Copolyamide unter Einbezug von 6T-, 9T-, 10T-, und/oder 12T-Einheiten, sowie Mischungen und/oder Kombinationen davon, wobei auch Polyamide mit Isophthalsäure als Edukt eingeschlossen sind.

In einer weiteren bevorzugten Ausführungsform ist das amorphe Polyamid- und/oder Copolyamid-Hartsegment A auf Basis von MACM, aliphatischen und/oder anderen cycloaliphatischen Diaminen, bevorzugt werden amorphe Polyamide des Typs MACMI, MACMI/MACMT, MACMI/MACMT/12, MACMI/12, MACMT/12, wobei der Gehalt an Laurinlactam in diesem Fall bevorzugt kleiner als 50 mol-%, insbesondere kleiner 35 mol-% ist. Dabei steht I für Isophthalsäure.

In einer weiteren Ausführungsform beruht das Polyamid-Hartsegment auf aromatischen Dicarbonsäuren mit 10 bis 18 Kohlenstoffatomen oder aliphatischen Dicarbonsäuren mit 6 bis 36 C-Atomen oder einer Mischung solcher Homopolyamide und/oder Copolyamide, bevorzugt auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das Homopolyamid- und/oder Copolyamid-Hartsegment A kann vorteilhafterweise ein Polyamid sein ausgewählt aus der Gruppe: 6I/MACMI/MACMT, 6I/6T/MACMI, MACMI/MACM36, lactamhaltige Polyamide, wie 12/MACMI, 12/MACMT, 12/MACM6-18 oder einer Mischung davon. Weitere mögliche Systeme sind: MACM6-18, MACM6-18/PACM6-18 oder daraus gebildete Mischungen.

### Biopolyamid-Elastomere auf Basis nachwachsenderRohstoffe:

Darunter ist zu verstehen, dass bei der vorliegenden Erfindung zumindest teilweise solche Polyamid-bildenden Monomere eingesetzt werden können, die aus biogenen (sowohl pflanzlichen als auch tierischen Ursprungs) Rohstoffen, wie insbesondere aus Rizinusöl, gewonnen wurden. Trotz des biologischen Ursprungs solcher Monomere bilden diese durch den Einbau in die Polyamid-Molekülketten stabile Polymere, die den Polyamiden bzw. Polyamid-Elastomeren aus rein synthetischen Monomeren in der Beständigkeit und den technischen Anwendungsmöglichkeiten in nichts nachstehen.

Die hier offengelegte Lehre unterstützt den Fachmann auch insofern, dass durch den erfindungsgemäßen Einsatz reaktiver Stabilisatoren eine weitere Compoundierung des Polyamid-Elastomers zum Einbringen konventioneller Stabilisatoren entfallen kann. Dadurch wird der Energie- und Wassereinsatz reduziert.

Dabei ist es vorteilhaft, wenn die Hartsegmenteinheiten A₁ und A₂ 35 bis 95 Gew.-% relativ zu den Weichsegmenten B₁ und B₂ ausmachen und aufgebaut sind aus
(a1) Aminoundecansäure und/oder
(a2) Azelainsäure und/oder Sebacinsäure und/oder C₃₆-Dimerfettsäure und/oder
(a3) Nonandiamin und/oder Decandiamin und/oder
(a4) Caprolactam und/oder Aminocapronsäure und/oder Laurinlactam und/oder Aminolaurinsäure und/oder
(a5) aliphatische C₆-C₈- und/oder C₁₁-C₁₈-Disäure und/oder Terephthalsäure und/oder Isophthalsäure und/oder
(a6) aliphatisches C₄-C₈- und/oder C₁₁-C₁₈-Diamin und/oder m-Xylylendiamin (MXD)

Bevorzugt machen die Weichsegmenteinheiten B₁, B₂ 5 bis 65 Gew.-% relativer Gewichtsanteil zu den Hartsegmenten A aus und sind aufgebaut aus jeweils wenigstens einem
(b1) C₃₆-Dimerdiol und/oder
(b2) Polyesterdiol auf Basis von C₃₆-Dimerfettsäure und/oder von C₃₆-Dimerdiol
(b3) Polyetherdiol auf Basis von Ethylenoxid und/oder Propylenoxid und/oder Tetrahydrofuran und/oder
(b4) Polyetherdiamin auf Basis von Ethylenoxid und/oder Propylenoxid und/oder Tetrahydrofuran

Dabei beträgt bevorzugt der Bioanteil nach ASTM D6866-06a der Hart- und Weichsegmente nach der allgemeinen Formel I des Polyamid-Elastomers mindestens 50 Gew.-%. Bevorzugt verfügt das gesamte Polyamid-Elastomer einschließlich gegebenenfalls vorhandener weiterer Komponenten über einen derart hohen Bioanteil. Weitere Komponenten könnten zum Beispiel weitere eingebaute Comonomere oder zugemischte Blendkomponenten sein. Maßgeblich und erfindungswesentlich ist auch bei Biopolyamid-Elastomeren die Stabilisierung durch Anbinden wenigstens eines Stabilisators gemäß Formel I.

Bevorzugt sind die Hart- und Weichsegmente (A₁, A₂ und B₁, B₂) ausschließlich aus den Bestandteilen (a1) bis (a6) sowie (b1) bis (b4) gebildet. Mit anderen Worten ist bevorzugt, dass die Summe der Komponenten (a1) bis (a6) und (b1) bis (b4) zusammen im wesentlichen 100 Gew.-%, bezogen auf A₁, A₂ bzw. B₁ und B₂, ergibt. Bevorzugt ist weiter, dass die Summe der Komponenten (a1) bis (a3), bezogen auf A₁, A₂, und (b1) und (b2), bezogen auf B₁, B₂, größer als 50 Gew.-% ist.

Insbesondere ist es bevorzugt, wenn die Summe der Komponenten (a1) bis (a3) bzw. (b1) und (b2) größer als 70 Gew.-%, bevorzugt größer als 80 Gew.-% ist. Ganz besonders bevorzugt ist die Summe der Komponenten (a1) bis (a3) und (b1) und (b2) im Wesentlichen 100 Gew.-%, bezogen auf A₁, A₂ bzw. B₁, B₂. Weiterhin ist es auch möglich, dass der Anteil an (b2) gleich null ist.

Weiterhin wird bevorzugt, wenn die Summe der Komponenten (a2), (a3) und (b1) im Wesentlichen 100 Gew.-% ist.

Eine weitere bevorzugte Ausführungsform ist dadurch gekennzeichnet, dass die Summe der Komponenten (a2), (a3), (b1) und (b2) im Wesentlichen 100 Gew.-% ist, und dass (a2) als Sebacinsäure und/oder C₃₆-Dimerfettsäure ausgewählt ist und (a3) als Decandiamin.

Eine weitere bevorzugte Ausführungsform ist dadurch gekennzeichnet, dass die Summe der Komponenten (a2), (a3) und (b1) im Wesentlichen 100 Gew.-% ist, und dass (a2) als Sebacinsäure ausgewählt ist und (a3) als Decandiamin.

Weiterhin ist bevorzugt, wenn das Verhältnis der Summe von (b1) und (b2) zur Summe gebildet aus (b1) bis (b4) größer oder gleich 0,1, besonders bevorzugt größer oder gleich 0,2 ist.

Vorzugsweise enthält das Polyamid-Elastomer im Wesentlichen ausschließlich die Komponenten A₁ und A₂ und B₁ und B₂, und die Hartsegmenteinheiten A₁ und A₂ machen relativ zu den Weichsegmenten B₁ und B₂ 5:95 und 95:5, bevorzugt 40:60 und 90:10, besonders bevorzugt 50:50 und 85:15 aus.

Besonders gute Eigenschaften werden erreicht, wenn die Hartsegmenteinheiten teilkristallin sind und Schmelzpunkte oberhalb von 130 °C aufweisen, bevorzugt im Bereich von 140 bis 240 °C, besonders bevorzugt im Bereich von 145 bis 200°C. Die Hartsegmenteinheiten sind bifunktionell und weisen bevorzugt COOH-Endgruppen auf. Dabei liegt bevorzugt eine Endgruppenkonzentration im Bereich von 200 bis 4000 mmol/kg, besonders bevorzugt im Bereich von 400 bis 3000 mmol/kg vor.

Eine weitere bevorzugte Ausführungsform ist dadurch gekennzeichnet, dass für die Regelung der Molmasse der Hartsegmenteinheiten ausschließlich Disäuren der Gruppe (a2) verwendet sind, bevorzugt ausgewählt aus Sebacinsäure und/oder C₃₆-Dimerfettsäure, insbesondere ausgewählt ausschließlich als Sebacinsäure.

Bevorzugt liegt die relative Lösungsviskosität (ηᵣₑₗ) in m-Kresol, 0,5 Gew.-%, bei 20 °C für das Polyamid-Elastomer im Bereich von 1,3 bis 2,6, besonders bevorzugt im Bereich von 1,4 bis 2,2, ganz bevorzugt im Bereich von 1,5 bis 2,0.

Bevorzugt werden die Hartsegmenteinheiten (A) ausschließlich auf Basis von PA1010, gegebenenfalls geregelt durch Sebacinsäure und/oder C₃₆-Dimerfettsäure, gebildet und die Weichsegmenteinheiten ausschließlich aus C₃₆-Dimerdiol.

Vorzugsweise beruht das Polyamid-Elastomer zu mehr als 50 %, bevorzugt im Wesentlichen vollständig auf nachwachsenden Rohstoffen. Dies wird erreicht, indem hauptsächlich oder sogar ausschließlich Monomere, wie z.B. Azelainsäure, Sebacinsäure, C₃₆-Dimerfettsäure, Aminoundecansäure, Nonandiamin, Decandiamin und C₃₆-Dimerdiol, zum Einsatz kommen, die aus diversen Pflanzenölen gewonnen werden.

Ein für die Monomerherstellung wichtiges Pflanzenöl ist das Rizinusöl, das aus dem Samen des afrikanischen Wunderbaumes (Rizinus Communis) gewonnen wird. Das Rizinusöl besteht zu 80 bis 90 % aus dem Triglyzerid der Rizinolsäure sowie aus weiteren Glyceriden verschiedener C₁₈-Fettsäuren. Seit Jahrtausenden wird Rizinusöl bereits als Heilmittel verwendet, es findet aber auch seit langem bei technischen Ölen, Kosmetika, Beschichtungen und Hydraulikölen Einsatz. Die Sebacinsäure wird durch alkalische Spaltung von Rizinusöl bei hohen Temperaturen und nachfolgender Behandlung mit Salzsäure erhalten. Aus dem Methylester der Rizinussäure wird durch pyrolytische Zersetzung Heptaldehyd und Methyl-10-undecensäureester gewonnen, wobei letzterer über mehrere Reaktionsstufen in die 11-Aminoundecansäure überführt wird.

Azelainsäure und Brassilsäure basieren ebenfalls auf natürlichen Rohstoffen, sie werden durch Ozonolyse der Öl- bzw. Erucasäure hergestellt. Die Erucasäure wird aus dem Samen von Raps, Senf, Goldlack oder Kresse gewonnen.

Die C₃₆-Dimersäuren und die C₃₆-Dimerdiole werden durch thermische Dimerisierung von ungesättigten C₁₈-Carbonsäuren oder deren Ester hergestellt. Ausgangsstoffe sind z.B. Tallölfettsäuren sowie die Öl- oder Linolensäure.

Nonandiamin, Decandiamin und Tridecandiamin beruhen ebenfalls auf natürlichen Rohstoffen, da sie aus den entsprechenden Dicarbonsäuren über die Dinitrilroute hergestellt werden.

Weitere Rohstoffe, beispielsweise gewonnen durch mikrobiologische Fermentation, befinden sich im industriellen Aufbau, und können ebenfalls eingesetzt werden.

Das Polyamid-Elastomer ist also bevorzugt dadurch gekennzeichnet, dass es einen Bioanteil nach ASTM D6866-06a von mindestens 70 Gew.-% oder von mindestens 75 Gew.-% aufweist. Besonders bevorzugt ist ein Bioanteil von mindestens 80 Gew.-% oder von mindestens 85 Gew.-%, insbesondere von wenigstens 95 Gew.-%. Möglich ist sogar ein Anteil im Bereich von 98 bis 100 Gew.-%.

In einer anderen Ausführungsform ist es bevorzugt, wenn das Polyamid-Elastomer dem folgenden Aufbau genügt:
Gemäß einer bevorzugten Ausführungsform beruht das Polyamid-Segment zu wenigstens 20 mol-%, bevorzugt zu mindestens 30 mol-%, besonderes bevorzugt zu mindestens 40 mol-% auf alkylsubstituiertem Bis(aminocyclohexyl)methan und/oder alkylsubstituiertem Bis(aminocyclohexyl)propan, d.h. beim Polyamid-Segment handelt es sich um ein Copolyamid, oder aber es beruht sogar vollständig auf alkylsubstituiertem Bis(aminocyclohexyl)methan oder Bis(aminocyclohexyl)propan (Homo - oder Copolyamide). Als Alkylsubstituenten werden lineare und/oder verzweigte C₁-C₆-, bevorzugt C₁-C₄-Alkylgruppen, insbesondere Methyl-, Ethyl-, Propyl-, Isopropyl- oder Butyl-Gruppen, besonders bevorzugt Methylgruppen bevorzugt. In einer besonders bevorzugten Ausführungsform wird als alkylsubstituiertes Bis(aminocyclohexyl)methan MACM (Bis(4-amino-3-methylcyclohexyl)methan) eingesetzt.

Für diesen Fall ist es bevorzugt, wenn die zahlenmittlere Molmasse Mₙ des Polyamid-Segmentes z.B. durch einen Überschuss an Dicarbonsäure oder Diamin bevorzugt auf 500 bis 5000 g/mol, bevorzugt auf 700 bis 4000 g/mol und besonders bevorzugt auf 750 bis 3000 g/mol eingestellt wird. Zur Regelung der Molmasse werden bevorzugt diejenigen Dicarbonsäuren oder Diamine eingesetzt, die auch zum Aufbau der Polyamidsegmente verwendet werden. Es können jedoch auch strukturell andere Dicarbonsäuren oder Diamine eingesetzt werden, wie sie später näher beschrieben werden.

Zur Regelung der Molmasse, der relativen Viskosität bzw. der Fließfähigkeit oder des MVR können dem Ansatz des Polyamidsegmentes und/oder dem Ansatz des Polyamid-Elastomeren zusätzlich zu den genannten Dicarbonsäuren oder Diaminen monofunktionelle Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclo-hexylamino)-propylamin, Methylcyclohexylamin, Dimethylcyclohexylamin, Benzylamin, 2-Phenylethylamin, u.a.. Die Regler können einzeln oder in Kombination benutzt werden. Es können auch andere monofunktionelle Verbindungen als Regler eingesetzt werden, die mit einer Amino- oder Säuregruppe reagieren können, wie Anhydride, Isocyanate, Säurehalogenide oder Ester. Die übliche Einsatzmenge der Regler liegt zwischen 10 und 200 mmol pro kg Polymer.

Das Polyamid-Elastomer verfügt vorzugsweise gemäß einer weiteren Ausführungsform mindestens über eine amorphe Phase, welche bevorzugt von der Weichsegment-Einheit, wie z.B. vom Ether- und/oder Esteranteil, herrührt. Die Glasübergangstemperatur respektive der Glasübergangspunkt dieser amorphen Phase beträgt gemäß einer bevorzugten Ausführungsform höchstens 20 °C. Diese amorphe Phase der transparenten Polyesteramide verfügt bevorzugt über einen Glasübergangspunkt von weniger als 0 °C, bevorzugt von weniger als - 20 °C.

Es widerspricht jedoch nicht der Erfindung, wenn die Weichsegmente ebenfalls kristalline bzw. bevorzugt mikrokristalline Bereich aufweist.

Bevorzugte Beispiele, die das Weichsegment B repräsentieren können, sind dabei ausgewählt aus der Gruppe bestehend aus Polyethern, Polyestern, Polyolefinen, Polysiloxanen, Polycarbonaten, Polycarbamaten und/oder Polycaprolactonen.

Gemäß einer weiter bevorzugten Ausführungsform ist das Polyamid-Elastomer wenigstens ein, respektive das einzige vorhandene Polyesteramid, Polyetheramid oder Polyetheresteramid, das sich aus den Polyamid-Anteilen A₁ und A₂ und den Weichsegmenten B₁ und B₂ zusammensetzt, wobei der Gewichtsanteil der Polyamidsegmente A₁ und A₂ relativ zu den Weichsegmenten B₁ und B₂ zwischen 0,05:1 und 20:1 liegt. Dabei können die Polyamide und Weichsegmente als Wiederholungseinheiten im Polyamid-Elastomer statistisch, alternierend oder blockweise angeordnet sein. In einer bevorzugten Ausführungsform liegt das Gewichtsverhältnis der Polyamidsegmente A₁ und A₂ relativ zu den Weichsegmenten B₁ und B₂ zwischen 10:1 und 1:6.

In einer weiteren bevorzugten Ausführungsform weist das inhärent stabilisierte Polyamid-Elastomer gemäß Formel I eine Lösungsviskosität (ηᵣₑₗ), gemessen in m-Kresol als 0,5 Gew.-%-Lösung, bei einer Temperatur von 20 °C, zwischen 1.3 und 3.0, besonders bevorzugt zwischen 1.4 und 2.5 auf. Weiterhin ist es bevorzugt, wenn das Polyamid-Elastomer einen Zug-E-Modul von weniger als 1000 MPa, bevorzugt von weniger als 800 MPa, besonders bevorzugt von weniger als 600 MPa aufweist.

Eine Formmasse, die das erfindungsgemäße Polyamid-Elastomer gemäß Formel I enthält, kann die üblichen Additive in den üblicherweise geringen Anteilen (weniger als 10 Gew.-%, bevorzugt weniger als 5 Gew.-%, besonders bevorzugt weniger als 3 Gew.-%) aufweisen. Bei den genannten Additiven kann es sich um zusätzliche Stabilisatoren, wie UV-Stabilisatoren, UV-Absorber, Hitzestabilisatoren, Radikalfänger und/oder um Verarbeitungshilfsstoffe, Weichmacher, weitere Polymere und/oder um funktionelle Additive, bevorzugt zur Beeinflussung optischer Eigenschaften, wie insbesondere des Brechungsindexes oder um Kombinationen oder Mischungen davon handeln. Des Weiteren können die Formmassen nanoskalige Füll- und/oder Funktionsstoffe, wie zum Beispiel Schichtmineralien (Schichtsilikate) oder Metalloxide (die unter anderem den Brechungsindex erhöhen) oder photochrome Farbstoffe beinhalten.

Im Sinne der Erfindung können die Formmassen außerdem dem Fachmann geläufige Füll- und/oder Zuschlagstoffe, beispielsweise Glasfasern, Glaskugeln, Carbonfasern, Ruß, Graphit, Flammschutzmittel, Mineral, wie zum Beispiel Calciumcarbonat oder Bariumsulfat, oder beispielsweise Schlagzähmodifikatoren, wie funktionalisierte Polyolefine enthalten.

Wenn eine mechanische Verstärkung erwünscht oder erforderlich ist, sind bei transparenten Polyamid-Elastomeren Schichtsilikate den Glasfasern vorzuziehen, weil das optische Erscheinungsbild durch Schichtsilikate deutlich weniger beeinträchtigt wird. Auch bei mechanischer Beanspruchung z.B. durch Biegung (wie sie an einer Schuhsohle auftritt) bleibt das Aussehen eines mit Schichtsilikat verstärkten Polyamid-Elastomers im Gebrauch unverändert gut. Schichtsilikate besitzen darüber hinaus auch eine gute UV Barriere Wirkung. Dieser Effekt kann insbesondere bei transparenten Polyamid-Elastomeren genutzt werden, so dass sich zu der bereits vorhandenen erfindungsgemässen Stabilisierung die UV-Barriere erhöht, ohne dass durch die Schichtsilikate die Transparenz wesentlich beeinträchtigt wird.

Erfindungsgemäß wird ebenso ein Verfahren zur Herstellung eines erfindungsgemäßen hitze- und/oder lichtstabilisierten Polyamid-Elastomers bereitgestellt, bei dem
a) mindestens ein bifunktionelles, an den Kettenenden jeweils eine reaktive Funktionalität aufweisendes Polyamid- und/oder Copolyamidsegment mit
b) mindestens einem bifunktionellen, an den Kettenenden jeweils eine, gegenüber den reaktiven Funktionalitäten des Polyamidsegments reaktive Funktionalität aufweisendes Weichsegment
in einem Gewichtsverhältnis der Komponenten a) und b) von 5:95 bis 95:5, bevorzugt 40:60 bis 90:10 und besonders bevorzugt 50:50 bis 85:15,
wobei vor und/oder während der Polykondensationsreaktion mindestens ein Reaktivstabilisator ausgewählt aus der Gruppe bestehend aus sterisch gehinderten Aminen, sterisch gehinderten Phenolen und Stabilisatoren, die im gleichen Molekül beide sterisch gehinderten Gruppen aufweisen, mit mindestens einer gegenüber dem mindestens einen Polyamidsegment und/oder dem mindestens einen Weichsegment reaktiven Funktionalität zugesetzt und chemisch mit dem entstehenden Polyamid-Elastomer verbunden wird.

Die Herstellung der Polyamid-Elastomere erfolgt somit in einem ein- oder zweistufigen Polykondensationsverfahren. Im einstufigen Verfahren werden die Polyamid bildenden Komponenten zusammen mit der Weichkomponente, z.B. der Ester- bzw. Polyester- und/oder der Polyether-Komponente in möglichst äquimolarem Verhältnis der Endgruppen der Einzelkomponenten gemischt und bei Temperaturen im Bereich von 180 bis 300 °C bis zum Erreichen der gewünschten Viskosität polykondensiert. Wird ein gezielter blockweiser Aufbau, insbesondere betreffend der Polyamid-Einheit angestrebt, oder werden Lactame als Rohstoff mit verwendet, kommt vorteilhaft das zweistufige Verfahren zum Einsatz. Hierbei werden in einer ersten Stufe zunächst die mit Carboxy- oder Amino-Endgruppen versehenen Polyamid-Einheiten aus den Komponenten a), b) und c) bei Temperaturen von 180 bis 320 °C und bei Drücken von 0 bis 20 bar gebildet, die dann nachfolgend mit den Weichsegment-Einheiten unter Atmosphärendruck oder reduziertem Druck (Vakuum) bei Temperaturen im Bereich von 180 bis 280 °C zum hochmolekularen Copolymeren polykondensiert werden. Werden Weichsegment-Einheiten mit Hydroxylendgruppen eingesetzt, werden vorteilhafterweise dem Fachmann bekannte Veresterungskatalysatoren, wie z.B. Zinnverbindungen, organische Titanate oder Zirkonate, zur Reaktionsbeschleunigung eingesetzt.

In einer bevorzugten Ausführungsform ist dabei der zum Einsatz kommende Reaktivstabilisator ausgewählt aus der Gruppe bestehend aus 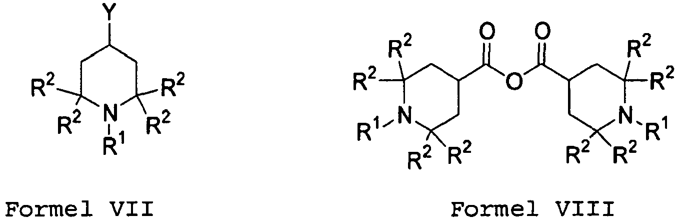 mit jeweils unabhängig voneinander
R¹ = H oder einem linearen oder verzweigten C₁-C₂₀ Alkylrest,
R² = unabhängig voneinander H oder einem linearen oder verzweigten C₁-C₂₀ Alkylrest, sowie
Y = -NHR¹, -OH oder -COX, mit X = -OR¹ oder Halogenen, und/oder
b) sterisch gehinderten Phenolen der allgemeinen Formeln IX und/oder X 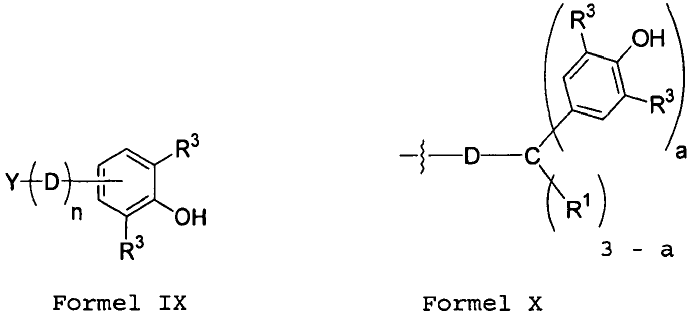 mit jeweils unabhängig voneinander
   R³ = H oder einem linearen oder verzweigten C₁-C₂₀-Alkylrest,
   D = einer linearen oder verzweigten C₁-C₂₀-Alkylenkette, die auch von den Heterogruppierungen -NR¹-, - O- und/oder -S- unterbrochen sein kann, wobei R¹ die oben angegebene Bedeutung hat,
   n = 0 oder 1,
   a = 1, 2 oder 3, wobei
   R¹ und Y wie oben definiert sind.

Besonders bevorzugte, zum Einsatz kommende Verbindungen sind nachfolgend angegeben:

| | | |
|---|---|---|
| 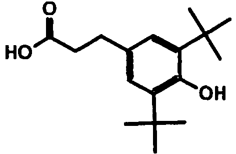 | 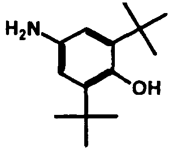 | 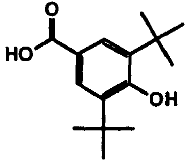 |
| 3-(3,5-di-*tert*-butyl-4-hydroxyphenyl)propanoic acid | 4-amino-2,6-di-*tert*-butylphenol | 3,5-di-*tert*-butyl-4-hydroxybenzoic acid |
| 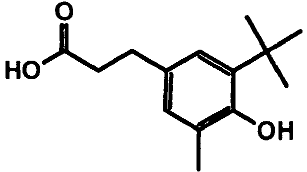 | 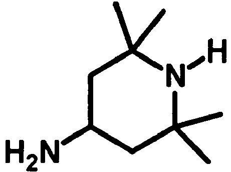 | 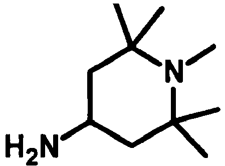 |
| 3-(3-*tert*-butyl-4-hydroxy-5- methylphenyl)propanoic acid | 2,2,6,6-tetramethylpiperidin-4- amine | 1,2,2,6,6-pentamethylpiperidin-4-amine |
| 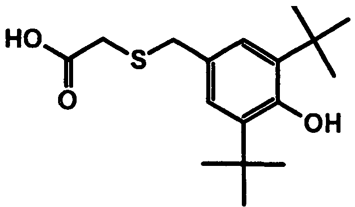 | 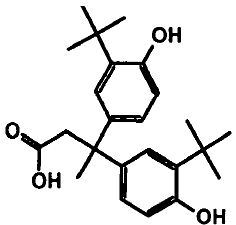 | 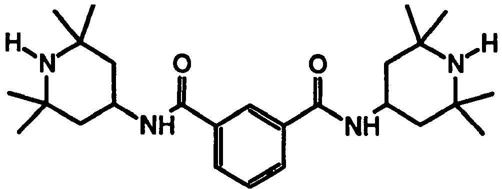 |
| 2-(3,5-di-*tert*-butyl-4- hydroxybenzylthio)acetic acid | 3,3-bis(3-*tert*-butyl-4- hydroxyphenyl)butanoic acid | *N*¹,*N*³-bis(2,2,6,6-tetramethylpiperidin-4-yl)isophthalamide |
| 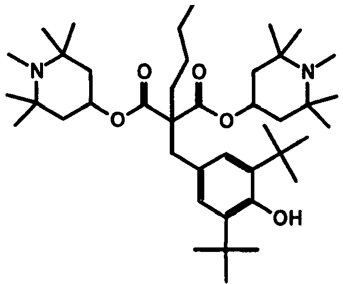 | 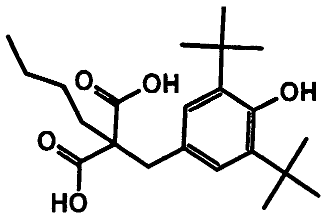 | 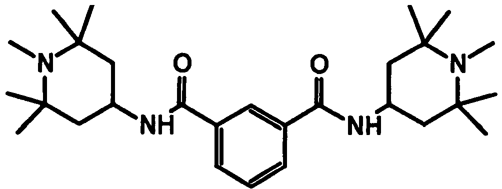 |
| bis(1,2,2,6,6-pentamethylpiperidin-4-yl) 2-butyl- 2-(3,5-di-*tert*-butyl-4-hydroxybenzyl)malonate | 2-butyl-2-(3,5-di-*tert*-butyl-4- hydroxybenzyl)malonic acid | *N*¹,*N*³-bis(1,2,2,6,6-pentamethylpiperidin-4-yl)isophthalamide |
| 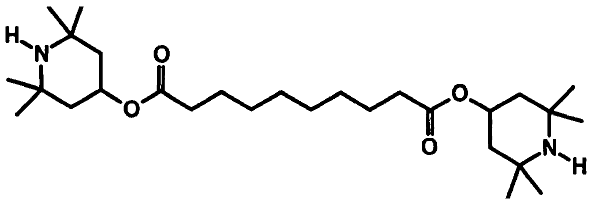 | | 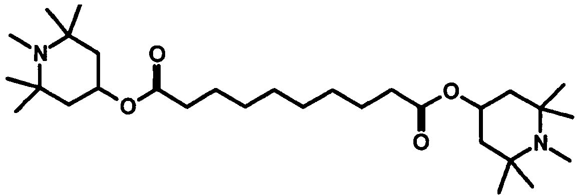 |
| bis(2,2,6,6-tetramethylpiperidin-4-yl) decanedioate | | bis(1,2,2,6,6-pentamethylpiperidin-4-yl) decanedioate |
| 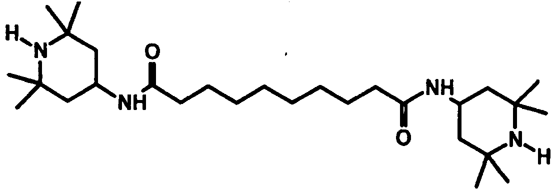 | | 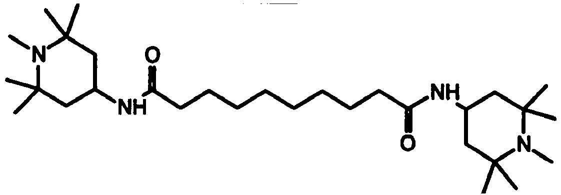 |
| *N*¹,*N*¹⁰-bis(2,2,6,6-tetramethylpiperidin-4-yl)decanediamide | | *N*¹,*N*¹⁰-bis(1,2,2,6,6-pentamethylpiperidin-4-yl)decanediamide |

Desweiteren betrifft die Erfindung Formmassen und Gegenstände aus einem derartigen Polyamid-Elastomer sowie einer dieses wenigstens als wesentlichen Bestandteil enthaltenden Formmasse und gleichermaßen entsprechendes Halbzeug, wie beispielsweise Granulat, etc. So betrifft sie beispielsweise auch einen transparenten (transparent in der Definition wie oben angegeben), bevorzugt trübungsfreien Gegenstand mit wenigstens einem Bereich oder einer Schicht aus einem Polyamid-Elastomer, wie es oben beschrieben wurde.

Ein solcher Gegenstand weist mit anderen Worten bei einer Schichtdicke der Schicht aus der Polyamid-Elastomere von 2 mm eine Transmission von mehr als 70 %, bevorzugt von mehr als 85 %, im Wellenlängenbereich von 500-700 nm und/oder einen Haze von höchstens 20 %, bevorzugt höchstens 15 %, besonders bevorzugt höchstens 10 %, auf.

Beim Gegenstand kann es sich gemäß verschiedenen Ausführungsformen um ein beliebiges Formteil wie eine Folie, ein Profil, ein Rohr, einen Schlauch, einen Hohlkörper oder ein Spritzgussteil handeln. Spezielle Artikel sind: ein optisch variabler Filter oder eine optische Linse, bevorzugt eine ophthalmische Linse, insbesondere bei zusätzlicher Anwesenheit eines Farbstoffes, beispielsweise eines photochromen Farbstoffes, oder ein Element mit spektraler Filterwirkung, wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display oder optischer Datenspeicher. Als weitere Verwendungsmöglichkeit sind zu nennen: Als Dekorationselement oder Strukturelement, wie beispielsweise als Brillenfassung, Spielzeug, Abdeckung, insbesondere als Mobiltelefongehäuse, Teil von elektronischen Geräten oder Haushaltgeräten, Beschichtung, insbesondere von Verpackungen oder Dekorationsartikeln, Sportgeräte, Teile von Sport- oder Freizeitgeräten, Griffe, Schuhsohlen, Verkleidungen, bevorzugt im Automobilbereich, Bürsten, bevorzugt im Kosmetik- bzw. Hygienebereich, Schläuche, bevorzugt im Medizinalbereich.

Zudem betrifft die vorliegende Erfindung ein Verfahren zur Herstellung eines solchen Gegenstandes, wobei ein Polyamid-Elastomer, wie es oben beschrieben wird, in einem Extrusionsverfahren, einem Spritzgussverfahren oder durch Hinterspritzen zum Gegenstand geformt wird.

Verwendungsmöglichkeiten des erfindungsgemäßen Polyamid-Elastomers finden sich z.B. für eine Folie, ein Profil, ein Rohr, einen Schlauch oder einen Hohlkörper, oder speziell für einen optisch variablen Filter oder eine optische Linse, bevorzugt um eine ophthalmische Linse, besonders bevorzugt um ein Element mit spektraler Filterwirkung, wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display oder optischer Datenspeicher, oder um ein Dekorationselement oder ein Strukturelement, wie beispielsweise als Brillenfassung, Spielzeug, Abdeckung, insbesondere als Mobiltelefongehäuse, Teil von elektronischen Geräten oder Haushaltgeräten, Beschichtung insbesondere von Verpackungen oder Dekorationsartikeln, Sportgeräte, Teile von Sport- oder Freizeitgeräten, Griffe, Schuhsohlen, Verkleidungen, bevorzugt im Automobilbereich.

### WEGE ZUR AUSFÜHRUNG DER ERFINDUNG

Die vorliegende Erfindung wird anhand der nachfolgenden Beispiele näher erläutert, ohne die Erfindung auf die angegebenen Substanzen/Parameter zu beschränken.

Dabei werden folgende Materialien eingesetzt:
DDS Dodekandisäure
MACM Bis-(4-amino-3-methyl-cyclohexyl)-methan
Lc12
Pripol 2033 ist ein C₃₆-Diol (CAS-Nr. 147853-32-5), erhältlich von Uniqema
Priplast 3197 ist ein Dimerdioldimerat (CAS-Nr. 177591-08-1), hergestellt aus Dimerdiol, wie z.B. Pripol 2033, und der C36- Dimerfettsäure, erhältlich von Uniqema
Tyzor NPZ Tetra-(n-propyl)-zirkonat, erhältlich von Dupont.
Elastamine RP-409 ist ein Polyetherdiamin mit einem Molekulargewicht von circa 440 g/mol und ist erhältlich von Huntsman.
Elastamine RP-2009 ist ein Polyetherdiamin mit einem Molekulargewicht von circa 2000 g/mol und ist erhältlich von Huntsman.
Empol 1062 ist eine partiell hydrierte C₃₆-Dimersäure (CAS-Nr. 61788-89-4), erhältlich von Cognis.

Die Polyamid-Elastomere B1 und B2 sowie VB1 und VB2 wurden mittels eines Polykondensationprozesses hergestellt. Die entsprechenden Zusammensetzungen und am polymerisierten Material gemessenen Eigenschaften sind in der folgenden Tabelle zusammengefasst:

| | **VB1** | **B1** | **VB2** | **B2** |
|---|---|---|---|---|
| Zusammensetzung | | | | |
| Laurinlactam | 83.49 | 83.49 | 38.48 | 38.48 |
| Dodecandisäure | 12.44 | 12.44 | - | - |
| C₃₆-Dimersäure | - | - | 14.18 | 14.18 |
| Triacetondiamin | - | 0.22 | - | 0.15 |
| Terathane 1000 | 53.80 | 53.80 | - | - |
| Elastamine RP-2009 | - | - | 46.80 | 46.80 |
| Jeffamine T403 | - | - | 0.37 | 0.37 |
| Zinnoctoat | 0.30 | 0.30 | - | - |
| H₃PO₃ | - | - | 0.02 | 0.02 |
| | | | | |

| Eigenschaften | | | | |
|---|---|---|---|---|
| E-Modul /MPa | 178 | 177 | 82 | 87 |
| Reißdehnung /% | 520 | 540 | 460 | 460 |
| RV | 1.94 | 1.96 | 1.80 | 1.84 |

| Bewitterung | | | | |
|---|---|---|---|---|
| Schlagzugzähigkeit [kJ/m²] | | | | |
| 0 h | 3540 | 2840 | 104 | 780 |
| 200 h | 95 | 1960 | 300 | 800 |
| 720 h | - | 480 | - | 33 |
| 1440 h | - | 110 | - | - |

Die Ausgangsmaterialien wurden unter Vorlegung der oben angegebenen Materialien in einem Rührkessel wie folgt hergestellt:

In einer ersten Stufe wird zunächst das Polyamid-Hartsegment polykondensiert. Dazu werden die polyamidbildenden Monomere (Laurinlactam, Dodekandisäure, etc.) in den Reaktor vorgelegt und mit Stickstoff inertisiert. Der Reaktor wird anschließend auf 270°C aufgeheizt und die Reaktionsmischung für 4 Stunden unter erhöhtem Druck gerührt, anschließend wurde Druck reduziert und für 3 h unter Stickstoffbeschleierung (Baroentgasung) bei einer Produkttemperatur von 260°C gerührt.

Bei den Beispielen B1 sowie VB1 werden in einer zweiten Stufe die carboxylterminierten Polyamid-Hartsegmente mit hydroxylterminierten Polyethern umgesetzt. Hierzu wird eine Mischung bestehend aus hydroxylterminierten Polyethern und Veresterungskatalysator zur Schmelze der Polyamid-Hartsegmente (Produkttemperatur: 230-260°C) hinzugesetzt.

Bei den Beispielen B2 sowie VB2 werden in einer zweiten Stufe das caboxylterminierte Polyamid-Hartsegment mit dem Polyetherdiamin umgesetzt. Hierzu wird das auf 150°C vorgewärmte Polyetherdiamin, gegebenenfalls zusammen mit zusätzlichen Stabilisatoren und Kondensationsbeschleunigern, zur Schmelze der Polyamid-Hartsegmente, die eine Produkttemperatur von 230 bis 260°C aufweist, hinzugesetzt.

Dann wird der Druck im Reaktor innerhalb von 60 Minuten auf 200 mbar reduziert. Nachdem die Reaktionsmischung 30 Minuten bei diesem Druck gerührt wurde, wird der Druck innerhalb von 60 Minuten bis zu einem Enddruck von kleiner 20 mbar gesenkt. Sobald das gewünschte Drehmoment erreicht wird, wird das Vakuum gebrochen, die Polymerschmelze mit Stickstoff von 5 bar beaufschlagt und durch Düsen in ein Wasserbad ausgetragen. Die abgezogenen Stränge werden granuliert und das Granulat 24h bei 80°C getrocknet.

Die relative Viskosität (ηᵣₑₗ) wurde bestimmt nach DIN EN ISO 307, in 0,5 Gew.-%iger m-Kresollösung bei einer Temperatur von 20°C.

Die Glasumwandlungstemperatur (Tg), der Schmelzpunkt (Tm) und die Schmelzwärme (Hm) wurden bestimmt nach ISO 11357-1/2. Die Differential scanning calorimetry (DSC) wurde mit einer Aufheizrate von 20K/min durchgeführt.

Der Haze und die Transmission wurden bei 23°C mit einem Haze-Gard Plus der Firma Byk-Gardener nach ASTM D-1003 (Lichtart C) an Rundplatten 70x2 mm bestimmt.

Zug-E-Modul, Reißfestigkeit und Reißdehnung wurden nach ISO 527 mit einer Zuggeschwindigkeit von 1 mm/min am ISO-Zugstab , Norm: ISO/CD 3167, Typ A1, 170 x 20/10 x 4 mm bei Temperatur 23 °C bestimmt.

Schlagzähigkeit und Kerbschlagzähigkeit nach Charpy wurden nach ISO 179/*eU am ISO-Prüfstab, Norm: ISO/CD 3167, Typ B1, 80 x 10 x 4 mm bei Temperatur 23 °C gemessen.

Die Bewitterung wurde nach ISO 4892-2 "Künstliche Bewitterung mit Xenonlampen" ("Florida Klima") durchgeführt. Hierfür wurde mit einem Weather O Meter Ci 4000 bewittert. Die Strahlung bei 340 nm gemessen 0,5 W/m² (Es wird mit dem ganzen Spektrum des Sonnenlichtes belichtet aber bei 340 nm gemessen) mit folgendem Zyklus 102 Minuten trocken/18 Minuten Beregnung (während der "Trockenphase" wird die Feuchte allerdings bei 65 % gehalten). Die Black Standard Temperatur (Schwarztafel) lag bei 65°C +/- 3°C.

Die Polyamid-Elastomere B3 sowie VB3 wurden mittels eines Polykondensationsprozesses wie oben beschrieben wurde hergestellt. Zusätzlich wurde VB3 über die klassische Methode des Zucompoundierens von Lichtschutzmitteln stabilisiert (VB4). Die entsprechenden Zusammensetzungen und am Material gemessenen Eigenschaften sind in der folgenden Tabelle zusammengefasst:

| | **VB3** | **B3** | **VB4** |
|---|---|---|---|
| Zusammensetzung | | | |
| Laurinlactam | 59.91 | 59.91 | |
| Dodecandisäure | 16.17 | 16.17 | |
| Triacetondiamin | - | 0.15 | |
| Elastamin RP-409 | 15.74 | 15.74 | |
| H₃PO₃ | 0.36 | 0.36 | |
| VB3 | | | 99.6 |
| TINUVIN 312 | | | 0.3 |
| TINUVIN 770DF | | | 0.1 |
| | | | |

| Eigenschaften | | | |
|---|---|---|---|
| E-Modul /MPa | 560 | 580 | 590 |
| Reißdehnung /% | 240 | 230 | 220 |
| RV | 1.96 | 1.96 | 1.94 |
| Transparency | 93 | 94 | 89 |
| Haze (Byk-Gardner) | 2 | 2 | 13 |
| Clarity | 99 | 99 | 88 |

Die Polyamid-Elastomere B4 bis B6 wurden mittels eines Polykondensationsprozesses hergestellt. Die entsprechenden Zusammensetzungen und am polymerisierten Material gemessenen Eigenschaften sind in der Tabelle zusammengefasst:

| | **Einheit** | **B4** | **B5** |
|---|---|---|---|
| Zusammensetzung | | | |
| Sebacinsäure | Gew.-% | 14.7 | |
| 1010-Salz | Gew.-% | 42.8 | |
| Pripol 2033 | Gew.-% | 42.5 | 42.4 |
| Terephthalsäure | Gew.-% | | 12.8 |
| Laurinlactam | Gew.-% | | 44.8 |
| Triacetondiamin | Gew.-% | 0.2 | 0.2 |
| Tyzor NPZ | Gew.-% | 0.1 | 0.1 |

| Eigenschaften | | | |
|---|---|---|---|
| Schmelzpunkt | °C | 180 | 134 |
| Zug-E-Modul | MPa | 125 | 80 |
| Reißdehnung | % | 540 | 430 |
| Kerbschlagzähigkeit Charpy 23°C | kJ/m² | O.B. | o.B. |
| Kerbschlagzähigkeit Charpy -30°C | kJ/m² | 15 | 5 |

Die Ausgangsmaterialien wurden unter Vorlegung der oben angegebenen Materialien in einem Rührkessel wie folgt hergestellt:

In einer ersten Stufe wird zunächst das Polyamid-Hartsegment polykondensiert. Dazu werden die polyamidbildenden Monomere (1010-Salz, d.h. Salz aus Sebacinsäure und Decandiamin, Sebacinsäure) in den Reaktor vorgelegt und mit Stickstoff inertisiert. Der Reaktor wird anschließend auf 270°C aufgeheizt und die Reaktionsmischung für 4 Stunden unter Stickstoffbeschleierung (Baroentgasung) bei einer Produkttemperatur von 260°C gerührt.

Bei den Beispielen werden in einer zweiten Stufe die carboxylterminierten Polyamid-Hartsegmente mit Diolen und/oder hydroxylterminierten Polyestern umgesetzt. Hierzu wird eine Mischung bestehend aus Diol, Polyester und Veresterungskatalysator zur Schmelze der Polyamid-Hartsegmente (Produkttemperatur: 230-260°C)

Dann wird der Druck im Reaktor innerhalb von 60 Minuten auf 200 mbar reduziert. Nachdem die Reaktionsmischung 30 Minuten bei diesem Druck gerührt wurde, wird der Druck innerhalb von 60 Minuten bis zu einem Enddruck von kleiner 20 mbar gesenkt. Sobald das gewünschte Drehmoment erreicht wird, wird das Vakuum gebrochen, die Polymerschmelze mit Stickstoff von 5 bar beaufschlagt und durch Düsen in ein Wasserbad ausgetragen. Die abgezogenen Stränge werden granuliert und das Granulat 24h bei 80°C getrocknet,

Anschließend wurden diese Mischungen auf einer Arburg Allrounder 350-90-220D Spritzgussmaschine zu verschiedenen Probekörpern verarbeitet, wobei die Zylindertemperaturen zwischen 180-260°C und die Formtemperatur zwischen 20 und 60 °C lagen. Die Schneckendrehzahl betrug 150-400 Upm.

## Patentansprüche

1. Inhärent stabilisiertes Polyamid-Elastomer gemäß folgender Formel I: 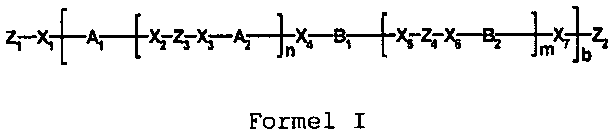 mit
A₁ und A₂ = bifunktionelle Polyamid- und/oder Copolyamidsegmente
B₁ und B₂ = bifunktionelle Weichsegmente, wobei das Weichsegment B₁ und/oder B₂ aus der Gruppe bestehend aus Polyethern, Polyestern, Poly-olefinen, Polysiloxanen, Polycarbonaten, Polycarbamaten und/oder Polycaprolactonen ausgewählt ist.
X₁ bis X₇ = unabhängig voneinander eine Amid-(-CON(H)-) oder Esterbindung (-COO-)
b = 1 bis 100'000,
n und m = unabhängig voneinander 0 oder 1,
**dadurch gekennzeichnet, dass**
Z₁ und Z₂ unabhängig voneinander Wasserstoff, ein monofunktioneller Regler und/oder ein chemisch gebundener Reaktivstabilisator ausgewählt aus der Gruppe bestehend aus sterisch gehinderten Aminen und/oder sterisch gehinderten Phenolen sind,
und wobei Z₃ und Z₄ unabhängig voneinander ein bifunktioneller Regler mit chemisch gebundenem Reaktivstabilisator ausgewählt aus der Gruppe bestehend aus sterisch gehinderten Aminen, sterisch gehinderten Phenolen sind, mit der Maßgabe, dass für den Fall, dass m=n=0 zumindest ein Z₁ oder Z₂ ein chemisch gebundener Reaktivstabilisator ist, der chemisch an die Polymerkette gebunden ist, und der Gewichtsanteil des bifunktionellen Polyamid- und/oder Copolyamidsegments relativ zum bifunktionellen Weichsegment zwischen 0,05:1 und 20:1 beträgt, und die Reste bzw. Gruppen A₁, A₂ sowie B₁ und B₂ und X₁ bis X₇ sowie Z₁ und Z₂ sowie Z₃ und Z₄ können dabei gleich oder verschieden sein.

2. Polyamid-Elastomer nach vorhergehendem Anspruch, **dadurch gekennzeichnet, dass** Z₁ und/oder Z₂ unabhängig voneinander ausgewählt sind aus der Gruppe bestehend aus Wasserstoff oder den Resten der folgenden Formeln II bis IV 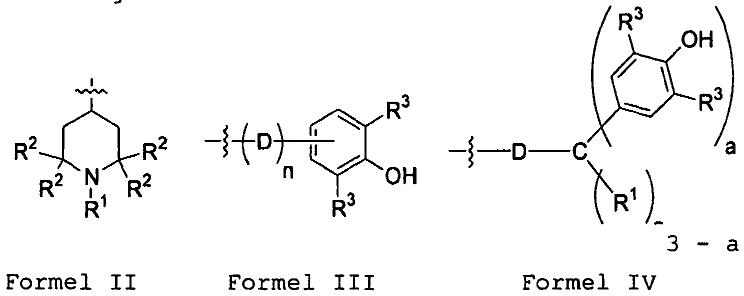
R¹ = H oder einem linearen oder verzweigten C₁-C₂₀ Alkylrest,
R² = unabhängig voneinander H oder einem linearen oder verzweigten C₁-C₂₀ Alkylrest,
R³ = H oder einem linearen oder verzweigten C₁-C₂₀-Alkylrest,
D = einer linearen oder verzweigten C₁-C₂₀-Alkylenkette, die auch von den Heterogruppierungen -NR¹-, -O- und/oder -S- unterbrochen sein kann, wobei R¹ die oben angegebene Bedeutung hat,
n = 0 oder 1, sowie
a = 1, 2 oder 3
und/oder Z₃ und/oder Z₄ ausgewählt sind aus der Gruppe bestehend aus Resten gemäß den allgemeinen Formeln V und VI 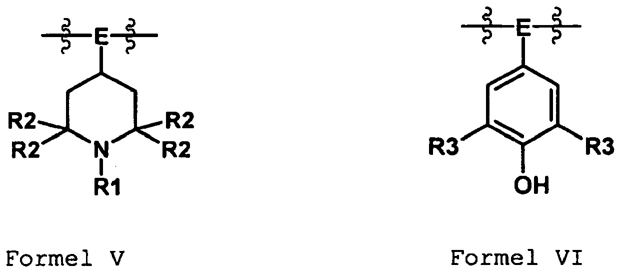 wobei R¹ - R³ wie oben angegeben definiert ist und E = ein linearer oder verzweigter C₁-C₂₀-Alkylen- oder Arylen-Rest, der auch von den Heterogruppierungen -NR¹-, -O- und/oder -S- unterbrochen sein kann, ist.

3. Polyamid-Elastomer nach einem der beiden vorhergehenden Ansprüche, **dadurch gekennzeichnet, dass** der Gewichtsanteil der Gewichtssumme der bifunktionellen Polyamidsegmente A₁, A₂ relativ zur Gewichtssumme der bifunktionellen Weichsegmente B₁, B₂ zwischen 5:95 und 95:5 beträgt.

4. Polyamid-Elastomer nach einem der vorhergehenden Ansprüche, **dadurch gekennzeichnet dass** das zahlenmittlere Molekulargewicht Mₙ der bifunktionellen Polyamidsegmente A₁ und A₂ unabhängig voneinander zwischen 200 und 5000 g/mol beträgt,
und/oder
das zahlenmittlere Molekulargewicht Mₙ der bifunktionellen Weichsegmente B₁ und B₂ unabhängig voneinander zwischen 200 und 5000 g/mol beträgt.

5. Polyamid-Elastomer nach einem der Ansprüche 1 bis 4, **dadurch gekennzeichnet, dass** die Polyamidsegmente A₁ und A₂ unabhängig voneinander ein Polykondensat aus
a) mindestens einem Diamin, insbesondere einem aliphatischen und/oder cycloaliphatischen Diamin mit 2 bis 26 Kohlenstoffatomen und/oder einem arylaliphatischen Diamin mit 6 bis 36 Kohlenstoffatomen, sowie
b) mindestens einer aliphatischen und/oder cycloaliphatischen Dicarbonsäure mit 2 bis 36 Kohlenstoffatomen und/oder einer aromatischen Dicarbonsäure mit 6 bis 36 Kohlenstoffatomen, und/oder
c) mindestens einem Lactam und/oder mindestens einer Aminocarbonsäure, jeweils mit 2 bis 36 Kohlenstoffatomen
sind.

6. Polyamid-Elastomer nach einem der Ansprüche 1 bis 5, **gekennzeichnet durch** ein gewichtsgemitteltes Molekulargewicht M zwischen 2000 und 60000 g/mol.

7. Polyamid-Elastomer nach einem der vorhergehenden Ansprüche, **dadurch gekennzeichnet, dass** es zumindest teilweise auf Monomeren basiert, die aus nachwachsenden Rohstoffen gewonnen wurden.

8. Polyamid-Elastomer nach einem der Ansprüche 1 bis 7, **gekennzeichnet durch** einen E-Modul < 1.000 MPa.

9. Polyamid-Elastomer nach einem der Ansprüche 1 bis 8, **gekennzeichnet durch** einen Haze (Trübung) von höchstens 20 % gemessen nach ASTM 1003 bei einer Schichtdicke von 2 mm.

10. Verfahren zur Herstellung eines hitze- und/oder lichtstabilisierten Polyamid-Elastomers nach einem der vorhergehenden Ansprüche, bei dem
a) mindestens ein bifunktionelles, an den Kettenenden jeweils eine reaktive Funktionalität aufweisendes Polyamidsegment mit
b) mindestens einem bifunktionellen, an den Kettenenden jeweils eine, gegenüber den reaktiven Funktionalitäten des Polyamidsegments reaktive Funktionalität aufweisendes Weichsegment in einem Gewichtsverhältnis der Komponenten a) und b) von 0,1 bis 0,95 vermischt und polykondensiert wird,
**dadurch gekennzeichnet,**
**dass** vor und/oder während der Polykondensationsreaktion mindestens ein Reaktivstabilisator ausgewählt aus der Gruppe bestehend aus sterisch gehinderten Aminen, sterisch gehinderten Phenolen, und/oder Stabilisatoren, die im gleichen Molekül beide sterisch gehinderte Gruppen aufweisen, mit mindestens einer gegenüber dem mindestens einen Polyamidsegment und/oder dem mindestens einen Weichsegment reaktiven Funktionalität zugesetzt und chemisch mit dem entstehenden Polyamid-Elastomer verbunden wird.

11. Verfahren nach vorhergehendem Anspruch, **dadurch gekennzeichnet, dass** der Reaktivstabilisator ausgewählt ist aus der Gruppe bestehend aus
a) sterisch gehinderten Aminen der allgemeinen Formeln VII und/oder VIII 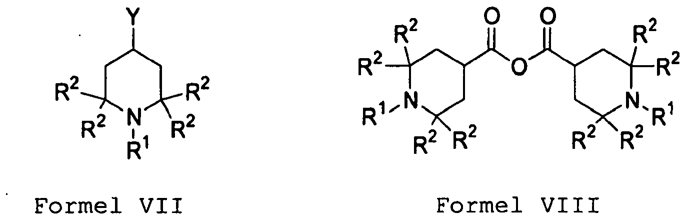 mit jeweils unabhängig voneinander
R¹ = H oder einem linearen oder verzweigten C₁-C₂₀ Alkylrest,
R² = unabhängig voneinander H oder einem linearen oder verzweigten C₁-C₂₀ Alkylrest, sowie
Y = -NHR¹, -OH oder -COX, mit X = -OR¹ oder Halogenen, und/oder
b) sterisch gehinderten Phenolen der allgemeinen Formeln IX und/oder X 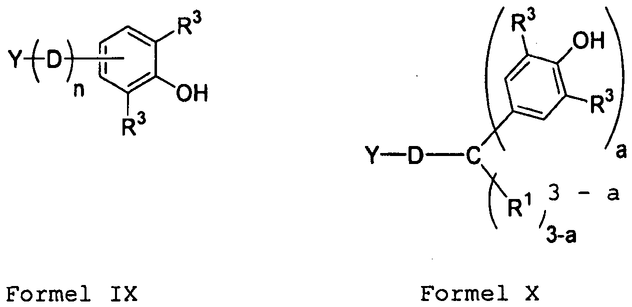 mit jeweils unabhängig voneinander
R³ = H oder einem linearen oder verzweigten C₁-C₂₀-Alkylrest,
D = einer linearen oder verzweigten C₁-C₂₀-Alkylenkette, die auch von den Heterogruppierungen -NR¹-, -O- und/oder -S-unterbrochen sein kann, wobei R¹ die oben angegebene Bedeutung hat,
n = 0 oder 1,
a = 1, 2 oder 3, wobei
R¹ und Y wie oben definiert sind.

12. Verfahren nach einem der vorhergehenden Ansprüche, **dadurch gekennzeichnet, dass** das gewichtsgemittelte Molekulargewicht Mₙ
a) des mindestens einen reaktiven Polyamidsegments jeweils unabhängig voneinander zwischen 200 und 5000 g/mol beträgt
und/oder
b) des mindestens einen reaktiven Polyamidsegments jeweils unabhängig voneinander zwischen 200 und 5000 g/mol beträgt.

13. Verfahren nach einem der vorhergehenden Ansprüche 10 bis 12, **dadurch gekennzeichnet, dass** das Gewichtsverhältnis des mindestens ein reaktiven Polyamidsegments zum mindestens einen, gegenüber dem Polyamidsegment reaktiven Weichsegment zwischen 5:95 und 95:5, bevorzugt zwischen 40:60 und 90:10, besonders bevorzugt zwischen 50:50 und 85:15, eingestellt wird.

14. Verwendung einer Formmasse enthaltend ein Polyamid-Elastomer nach einem der Ansprüche 1 bis 9 für eine Folie, ein Profil, ein Rohr, einen Schlauch oder einen Hohlkörper, für einen optisch variablen Filter, eine optische Linse, eine ophthalmische Linse, ein Element mit spektraler Filterwirkung, als Brillenglas, Sonnenlinse, Korrekturlinse, optischer Filter, als Schaltaggregat zur optischen Signalverarbeitung, Skibrille, Visier, Schutzbrille, Fotorecording, Display oder optischer Datenspeicher, ein Dekorationselement oder ein Strukturelement, als Brillenfassung, Spielzeug, Abdeckung, als Mobiltelefongehäuse, Teil von elektronischen Geräten oder Haushaltgeräten, Beschichtung, als Beschichtung von Verpackungen oder Dekorationsartikeln, Sportgeräte, Teile von Sport- oder Freizeitgeräten, Griffe, Schuhsohlen, Verkleidungen, Verkleidungen im Automobilbereich, Bürsten, Bürsten im Kosmetik- bzw. Hygienebereich, Schläuche, Schläuche im Medizinbereich.

15. Formteil herstellbar aus einem Polyamid-Elastomer nach mindestens einem der Ansprüche 1 bis 9.

16. Formteil nach Anspruch 15,
**dadurch gekennzeichnet, dass** es transparent ist und eine Transmission in einem Wellenlängenbereich von 500 bis 700 nm von mindestens 70 % bei einer Schichtdicke eines Prüfkörpers von 2 mm aufweist.

## Claims

1. Inherently stable polyamide elastomer according to the following formula I: 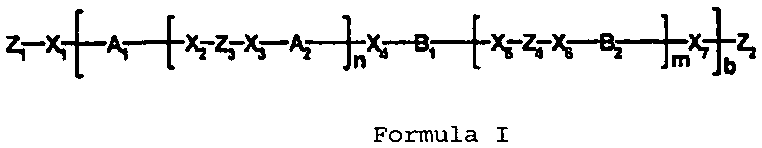 wherein
A₁ and A₂ = bifunctional polyamide and/or copolyamide segments
B₁ and B₂ = bifunctional soft segments, wherein the soft segment B₁ and/or B₂ is selected from the group comprising polyethers, polyesters, polyolefins, polysiloxanes, polycarbonates, polycarbamates and/or polycaprolactones.
X₁ to X₇ = each independently amide (-CON(H)-) or ester bonds (-COO-)
b = 1 to 100 000,
n and m = each independently 0 or 1,
**characterised in that**
Z₁ and Z₂ are each independently hydrogen, a monofunctional stabiliser and/or a chemically-bonded reactive stabiliser selected from the group comprising sterically hindered amines and/or sterically hindered phenols,
and wherein Z₃ and Z₄ are each independently a bifunctional stabiliser with a chemically-bonded reactive stabiliser selected from the group comprising sterically hindered amines and/or sterically hindered phenols, with the requirement that if m=n=0, at least Z₁ or Z₂ is a chemically-bonded reactive stabiliser, and the weight ratio of the bifunctional polyamide and/or copolyamide segment is between 0.05:1 and 20:1 relative to the bifunctional soft segment, and the radicals and/or groups A₁, A₂ as well as B₁ and B₂ and X₁ to X₇ as well as Z₁, Z₂ as well as Z₃ and Z₄ can be the same as, or different from, each other.

2. Polyamide elastomer according to the preceding claim, **characterised in that** Z₁ and/or Z₂ are each independently selected from the group comprising hydrogen or the radicals of the following formulae II to IV: 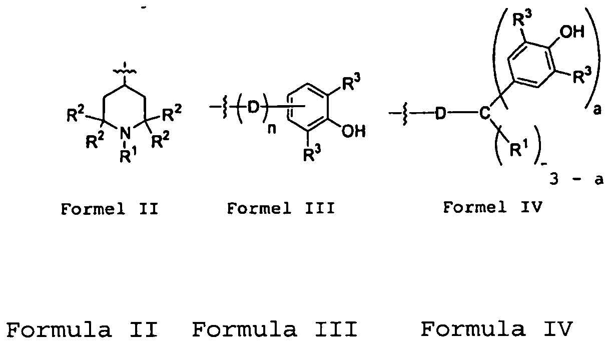 R¹ = H or a linear or branched C₁-C₂₀ alkyl radical,
R² = each independently H or a linear or branched C₁-C₂₀ alkyl radical,
R³ = H or a linear or branched C₁-C₂₀ alkyl radical,
D = a linear or branched C₁-C₂₀ alkyl chain, which can also be broken by the hetero groups -NR¹-, -O- and/or -S-, wherein R¹ has the above-defined meaning,
n = 0 or 1, and
a = 1, 2 or 3
and/or Z₃ and/or Z₄ are selected from the group comprising radicals according to the general formulae V and VI: 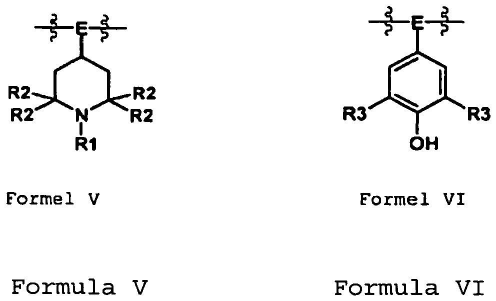 wherein R¹ - R³ are defined as above and E is a linear or branched C₁-C₂₀ alkylene or arylene radical, which can also be broken by the hetero groups -NR¹-, -O- and/or -S-.

3. Polyamide elastomer according to one of the two preceding claims, **characterised in that** the weight ratio of the sum weight of the bifunctional polyamide segments A₁, A₂ is between 5:95 and 95:5 relative to the sum weight of the bifunctional soft segments B₁, B₂.

4. Polyamide elastomer according to one of the preceding claims, **characterised in that** the number average molecular weight Mₙ of the bifunctional polyamide segments A₁ and A₂ is between 200 and 5000g/mol independently for each,
and/or
the number average molecular weight Mₙ of the bifunctional soft segments B₁ and B2 is between 200 and 5000g/mol independently for each.

5. Polyamide elastomer according to one of Claims 1 to 4, **characterised in that** the polyamide segments A₁ and A₂ are each independently a polycondensate made from
a) at least one diamine, in particular an aliphatic and/or cycloaliphatic diamine with 2 to 26 carbon atoms and/or an aryl-aliphatic diamine with 6 to 36 carbon atoms, and
b) at least one aliphatic and/or cycloaliphatic dicarboxylic acid with 2 to 36 carbon atoms and/or an aromatic dicarboxylic acid with 6 to 36 carbon atoms, and/or
c) at least one lactam and/or at least one amino acid, each with 2 to 36 carbon atoms.

6. Polyamide elastomer according to one of Claims 1 to 5, **characterised by** a weight-average molecular weight M of between 2000 and 60 000g/mol.

7. Polyamide elastomer according to one of the preceding claims, **characterised in that** it is at least partly based on monomers extracted from renewable raw materials.

8. Polyamide elastomer according to one of Claims 1 to 7, **characterised by** an elastic modulus of < 1.000 MPa.

9. Polyamide elastomer according to one of Claims 1 to 8, **characterised by** a haze value of 20% maximum, measured according to ASTM 1003 at a layer thickness of 2mm.

10. Method for producing a heat-stabilised and/or light-stabilised polyamide elastomer according to one of the preceding claims, wherein
a) at least one bifunctional polyamide segment having reactive functionality at the chain ends and
b) at least one bifunctional soft segment having reactive functionality at the chain ends opposite to the reactive functionality of the polyamide segment are mixed together at a weight ratio of components a) and b) of 0.1 to 0.95 and subjected to polycondensation,
**characterised in that**,
a reactive stabiliser selected from the group comprising sterically hindered amines, sterically hindered phenols and/or stabilisers having both sterically hindered groups in the same molecule is added to at least one functionality opposite to the at least one polyamide segment and/or the at least one soft segment before and/or during the polycondensation reaction, and chemically bonded to the polyamide elastomer produced.

11. Method according to the preceding claim, **characterised in that** the reactive stabiliser is selected from the group comprising
a) sterically hindered amines of the general formulae VII and/or VIII 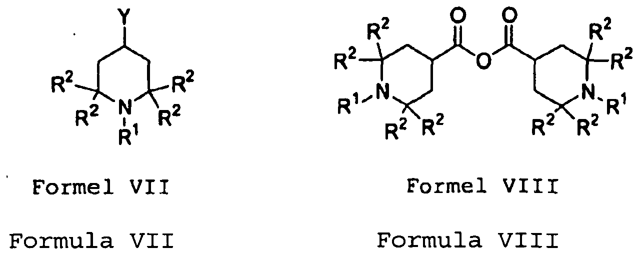 wherein the following are each independently:
R¹ = H or a linear or branched C₁-C₂₀ alkyl radical,
R² = each independently H or a linear or branched C₁-C₂₀ alkyl radical, and
Y = -NRH¹, -OH or -COX, where X = -OR¹ or halogens, and/or
b) sterically hindered phenols of the general formulae IX and/or X 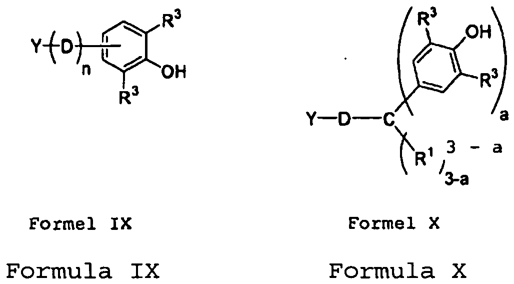 wherein the following are each independently:
R³ = H or a linear or branched C₁-C₂₀ alkyl radical,
D = a linear or branched C₁-C₂₀ alkylene chain, which can also be broken by the hetero groups -NR¹-, -O- and/or -S-, wherein R¹ stands for the same as above,
n = 0 or 1,
a = 1, 2 or 3, wherein
R¹ and Y are defined as above.

12. Method according to one of the preceding claims, **characterised in that** the weight-average molecular weight Mₙ
a) of at least one reactive polyamide segment is each independently between 200 and 5000g/mol and/or
b) of at least one reactive polyamide segment is each independently between 200 and 5000g/mol.

13. Method according to one of the preceding claims 10 to 12, **characterised in that** the weight ratio of the at least one reactive polyamide segment and the at least one reactive soft segment opposite to the polyamide segment is adjusted to between 5:95 and 95:5, preferably between 40:60 and 90:10 and particularly preferably between 50:50 and 85:15.

14. Use of a moulding compound containing a polyamide elastomer according to one of claims 1 to 9 for a film, a channel, a pipe, an inner tube or a hollow body, for an optically variable filter, an optical lens, an ophthalmic lens, an element with spectral filter effects, as a spectacle lens, a sunglass lens, a correction lens, an optical filter, as a switching unit for optical signal conversion, ski glasses, visors, protective glasses, photo recording, displays or optical databases, a decorative or structural element, as a spectacle frame, a toy, a covering sheet, as a mobile telephone case, part of electronic devices or household devices, coating, as a coating for packaging materials or decorative items, sports devices, parts of sports or leisure devices, handles, shoe soles, linings, vehicular linings, brushes, cosmetic and/or hygienic brushes, hoses, medical hoses.

15. Moulded part which can be produced from a polyamide elastomer according to at least one of Claims 1 to 9.

16. Moulded part according to Claim 15, **characterised in that** it is transparent and **in that** it has, within a wavelength range of 500 to 700nm, a transmission of at least 70% at a layer thickness of a test body of 2mm.

## Revendications

1. Polyamide-élastomère à stabilisation inhérente selon la formule I suivante : 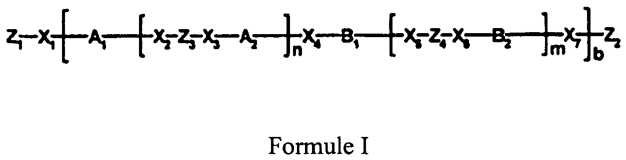 avec
A₁ et A₂ = segments polyamides et/ou copolyamides bifonctionnels
B₁ et B₂ = segments souples bifonctionnels, le segment souple B₁ et/ou B₂ étant choisi dans le groupe constitué par les polyéthers, les polyesters, les polyoléfines, les polysiloxanes, les polycarbonates, les polycarbamates et/ou les polycaprolactones
X₁ à X₇ = indépendamment l'une de l'autre une liaison amide (-CON(H)-) ou ester (-COO-)
b = 1 à 100 000,
n et m = indépendamment l'un de l'autre 0 ou 1,
**caractérisé en ce que**
Z₁ et Z₂ sont indépendamment les uns des autres l'hydrogène, un régulateur monofonctionnel et/ou un stabilisateur réactif relié chimiquement choisi dans le groupe constitué par les amines à encombrement stérique et/ou les phénols à encombrement stérique,
et où Z₃ et Z₄ sont indépendamment les uns des autres un régulateur bifonctionnel à stabilisateur réactif relié chimiquement choisi dans le groupe constitué par les amines à encombrement stérique, les phénols à encombrement stérique, à condition que lorsque m = n = 0, au moins un Z₁ ou Z₂ est un stabilisateur réactif relié chimiquement, qui est relié chimiquement à la chaîne polymère, et la proportion pondérale du segment polyamide et/ou copolyamide bifonctionnel par rapport au segment souple bifonctionnel est comprise entre 0,05:1 et 20:1, et les radicaux ou groupes A₁, A₂, ainsi que B₁ et B₂ et X₁ à X₇, ainsi que Z₁ et Z₂, ainsi que Z₃ et Z₄ peuvent dans ce cas être identiques ou différents.

2. Polyamide-élastomère selon la revendication précédente, **caractérisé en ce que** Z₁ et/ou Z₂ sont choisis indépendamment les uns des autres dans le groupe constitué par l'hydrogène ou les radicaux des formules II à IV suivantes 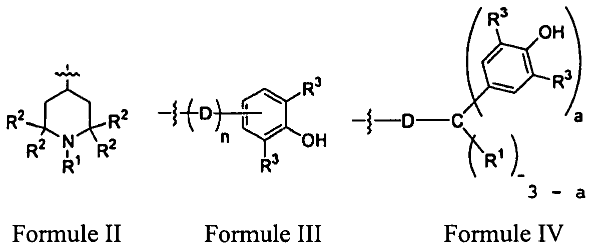 R¹ = H ou un radical alkyle en C₁-C₂₀ linéaire ou ramifié,
R² = indépendamment les uns des autres H ou un radical alkyle en C₁-C₂₀ linéaire ou ramifié,
R³ = H ou un radical alkyle en C₁-C₂₀ linéaire ou ramifié,
D = une chaîne alkylène en C₁-C₂₀ linéaire ou ramifiée, qui peut également être interrompue par les hétérogroupements -NR¹-, -O- et/ou -S-, R¹ ayant la signification donnée précédemment,
n = 0 ou 1, et
a = 1, 2 ou 3,
et/ou Z₃ et/ou Z₄ sont choisis dans le groupe constitué par les radicaux selon les formules générales V et VI 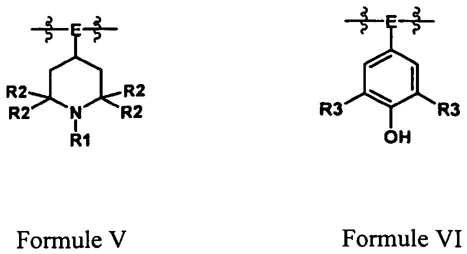 où R¹ à R³ sont tels que définis précédemment et E = un radical alkylène ou arylène linéaire ou ramifié en C₁-C₂₀, qui peut également être interrompu par les hétérogroupements -NR¹-, -O- et/ou -S-.

3. Polyamide-élastomère selon l'une quelconque des deux revendications précédentes, **caractérisé en ce que** la proportion pondérale de la somme pondérale des segments polyamides bifonctionnels A₁, A₂ par rapport à la somme pondérale des segments souples bifonctionnels B₁, B₂ est comprise entre 5:95 et 95:5.

4. Polyamide-élastomère selon l'une quelconque des revendications précédentes, **caractérisé en ce que** Mₙ, le poids moléculaire moyen en nombre, des segments polyamides bifonctionnels A₁ et A₂ est compris indépendamment l'un de l'autre entre 200 et 5 000 g/mol,
et/ou
Mₙ, le poids moléculaire moyen en nombre, des segments souples bifonctionnels B₁ et B₂ est compris indépendamment l'un de l'autre entre 200 et 5 000 g/mol.

5. Polyamide-élastomère selon l'une quelconque des revendications 1 à 4, **caractérisé en ce que** les segments polyamide A₁ et A₂ sont indépendamment les uns des autres un polycondensat de
a) au moins une diamine, en particulier une diamine aliphatique et/ou cycloaliphatique avec 2 à 26 atomes de carbone et/ou une diamine arylaliphatique avec 6 à 36 atomes de carbone, et
b) au moins un acide dicarboxylique aliphatique et/ou cycloaliphatique contenant 2 à 36 atomes de carbone et/ou un acide dicarboxylique aromatique contenant 6 à 36 atomes de carbone
et/ou
c) au moins un lactame et/ou au moins un acide aminocarboxylique, avec respectivement 2 à 36 atomes de carbone.

6. Polyamide-élastomère selon l'une quelconque des revendications 1 à 5, **caractérisé par** M, un poids moléculaire en poids moyen, compris entre 2 000 et 60 000 g/mol.

7. Polyamide-élastomère selon l'une quelconque des revendications précédentes, **caractérisé en ce qu'**il est au moins partiellement à base de monomères qui ont été obtenus à partir de matières premières renouvelables.

8. Polyamide-élastomère selon l'une quelconque des revendications 1 à 7, **caractérisé par** un module E < 1 000 MPa.

9. Polyamide-élastomère selon l'une quelconque des revendications 1 à 8, **caractérisé par** un voile (trouble) d'au plus 20 %, mesuré selon la norme ASTM 1003 à une épaisseur de couche de 2 mm.

10. Procédé de fabrication d'un polyamide-élastomère thermo- et/ou photostabilisé selon l'une quelconque des revendications précédentes, dans lequel
a) au moins un segment polyamide bifonctionnel, présentant aux extrémités de chaînes respectivement une fonctionnalité réactive, est mélangé et polycondensé avec
b) au moins un segment souple bifonctionnel présentant respectivement aux extrémités de chaînes une fonctionnalité réactive à l'égard des fonctionnalités réactives du segment polyamide
dans un rapport pondéral des composants a) et b) de 0,1 à 0,95,
**caractérisé en ce que**
avant et/ou pendant la réaction de polycondensation, au moins un stabilisateur réactif choisi dans le groupe constitué par les amines à encombrement stérique, les phénols à encombrement stérique et/ou les stabilisateurs qui présentent les deux groupes à encombrement stérique dans la même molécule, est ajouté avec au moins une fonctionnalité réactive à l'égard du au moins un segment polyamide et/ou du au moins un segment souple, et relié chimiquement avec le polyamide-élastomère s'étant constitué.

11. Procédé selon la revendication précédente, **caractérisé en ce que** le stabilisateur réactif est choisi dans le groupe constitué par
a) les amines à encombrement stérique des formules générales VII et/ou VIII 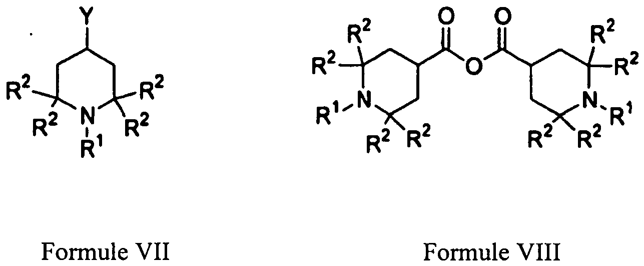 Avec respectivement indépendamment les uns des autres,
R¹ = H ou un radical alkyle en C₁-C₂₀ linéaire ou ramifié,
R² = indépendamment les uns des autres H ou un radical alkyle en C₁-C₂₀ linéaire ou ramifié, et
Y = -NHR¹, -OH ou -COX, avec X = -OR¹ ou des halogènes, et/ou
b) les phénols à encombrement stérique des formules générales IX et/ou X 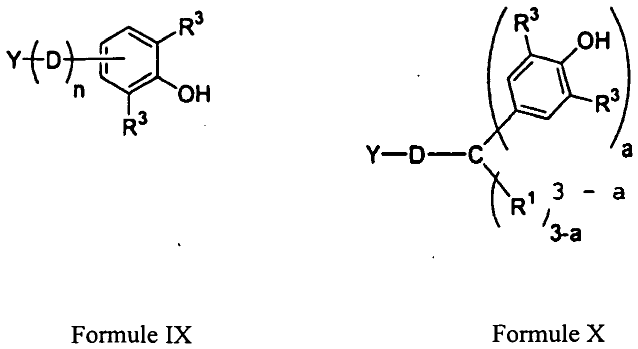 Avec respectivement indépendamment les uns des autres,
R³ = H ou un radical alkyle en C₁-C₂₀ linéaire ou ramifié,
D = une chaîne alkylène en C₁-C₂₀ linéaire ou ramifiée, qui peut également être interrompue par les hétérogroupements -NR¹-, -O- et/ou -S-, R¹ ayant la signification donnée précédemment,
n = 0 ou 1,
a = 1, 2 ou 3, où
R¹ et Y sont tels que définis précédemment.

12. Procédé selon l'une quelconque des revendications précédentes, **caractérisé en ce que** Mₙ, le poids moléculaire moyen en poids,
a) du au moins un segment polyamide réactif est respectivement indépendamment les uns des autres compris entre 200 et 5 000 g/mol
et/ou
b) du au moins un segment polyamide réactif est respectivement indépendamment les uns des autres compris entre 200 et 5 000 g/mol.

13. Procédé selon l'une quelconque des revendications 10 à 12, **caractérisé en ce que** le rapport pondéral du au moins un segment polyamide réactif au au moins un segment souple réactif à l'égard du segment polyamide est ajusté à entre 5:95 et 95:5, de préférence entre 40:60 et 90:10, de manière particulièrement préférée entre 50:50 et 85:15.

14. Utilisation d'une matière à mouler contenant un polyamide-élastomère selon l'une quelconque des revendications 1 à 9 pour une feuille, un profilé, un tube, un tuyau ou un corps creux, pour un filtre optiquement variable, une lentille optique, une lentille ophtalmique, un élément à effet de filtre spectral, en tant que verre à lunettes, lentille solaire, lentille correctrice, filtre optique, en tant qu'agrégat de commutation pour le traitement d'un signal optique, lunettes de ski, visière, lunettes de protection, photo-enregistrement, afficheur ou mémoire de données optique, un élément décoratif ou un élément structural, en tant que monture de lunettes, jouet, couvercle, en tant que boîtier de téléphone portable, partie d'appareils électroniques ou d'appareils ménagers, revêtement, en tant que revêtement d'emballages ou d'articles décoratifs, appareils de sport, parties d'appareils de sport ou de loisirs, poignées, semelles de chaussures, habillages, habillages dans le domaine automobile, brosses, brosses dans le domaine cosmétique ou de l'hygiène, tuyaux, tuyaux dans le domaine médical.

15. Pièce moulée pouvant être fabriquée à partir d'un polyamide-élastomère selon au moins l'une quelconque des revendications 1 à 9.

16. Pièce moulée selon la revendication 15, **caractérisée en ce qu'**elle est transparente et présente une transmission dans une plage de longueurs d'onde allant de 500 à 700 nm d'au moins 70 % à une épaisseur de couche d'une éprouvette de 2 mm.
